# EUROPEAN PATENT APPLICATION

(11) **EP 4 752 706 A1**
(43) Date of publication of application: **03.06.2026**
(21) Application number: 24865756.1
(22) Date of filing: 04.09.2024
(51) Int. Cl.: G06F 3/16, H04N 1/00, G06F 3/0484, G06F 9/451

(54) **SCREEN CAPTURE METHOD AND ELECTRONIC DEVICE THEREFOR**

(30) Priority: 15.09.2023 KR 20230123287; 21.03.2024 KR 20240039052
(71) Applicant: Samsung Electronics Co., Ltd., Suwon-si, Gyeonggi-do 16677 (KR)
(72) Inventor: LEE, Eunkyung, Suwon-si, Gyeonggi-do 16677 (KR); CHUNG, Dohee, Suwon-si, Gyeonggi-do 16677 (KR); SON, Seoyoung, Suwon-si, Gyeonggi-do 16677 (KR); KIM, Kyoungtaek, Suwon-si, Gyeonggi-do 16677 (KR); PARK, Semin, Suwon-si, Gyeonggi-do 16677 (KR); PARK, Jinwoo, Suwon-si, Gyeonggi-do 16677 (KR); PARK, Hyungjin, Suwon-si, Gyeonggi-do 16677 (KR); CHUNG, Dayoung, Suwon-si, Gyeonggi-do 16677 (KR)
(74) Representative: Gulde & Partner
(86) International application number: PCT/KR2024/013327
(87) International publication number: WO 2025/058315

(57) **Abstract**

Various embodiments of the present invention may comprise a display (160), a processor (120), and a memory (130). When executed by the processor, instructions stored in the memory may instruct the electronic device (101) to: display, on the display, a first execution screen of a first application; display, on the display, a second execution screen of a voice assistant application, second execution screen being overlaid on a partial area of the first execution screen of the first application; receive a screen capture command through the voice assistant application while the second execution screen is displayed overlaid on the partial area of the first execution screen; and perform screen capture on the basis of the screen capture command while the second execution screen is displayed overlaid on the partial area of the first execution screen, the screen capture being performed by saving an image of the first execution screen, on which an image of the second execution screen is not overlaid, in a partial area of the first execution screen. Various embodiments are possible.

## Description

### [Technical Field]

Various embodiments of the disclosure relate to a screen capture method and an electronic device thereof.

### [Background Art]

With the advancement of digital technology, various types of electronic devices, such as mobile terminals, personal digital assistants (PDAs), electronic organizers, smartphones, tablet PCs (personal computers), and wearable devices, are becoming widely used. These electronic devices are continuously improving their hardware and/or software configuration to support and enhance their functions.

Recently, technologies for understanding language and summarizing or condensing long sentences through large language models (LLMs) are advancing. Electronic devices obtain result data for user queries through LLM servers and provide the result data to users. However, since the result data contains a vast amount of information, the users may have to navigate through the result data to find the information they need.

### [Disclosure of Invention]

### [Technical Problem]

An embodiment may provide a method and device for capturing, when a screen capture command is received through a voice assistant application, an execution screen of a first application, capturing an execution screen of the voice assistant application, or capturing the entire screen of a display including the execution screen of the first application and the execution screen of the voice assistant application by analyzing a user intent.

### [Solution to Problem]

An electronic device 101 according to an embodiment of the disclosure may include a display 160, a processor 120, and a memory 130, and instructions stored in the memory may cause, when executed by the processor, the electronic device to display, on the display, a first execution screen of a first application, display, on the display, a second execution screen of a voice assistant application to be overlaid on a partial area of the first execution screen of the first application, receive a screen capture command through the voice assistant application while the second execution screen is displayed to be overlaid on the partial area of the first execution screen, and perform, based on the screen capture command, screen capture, while the second execution screen is displayed to be overlaid on the partial area of the first execution screen, by storing an image of the first execution screen in which an image of the second execution screen is not overlaid on the partial area of the first execution screen.

An operation method of an electronic device 101 according to an embodiment of the disclosure may include displaying, on a display 160 of the electronic device, a first execution screen of a first application, displaying, on the display, a second execution screen of a voice assistant application to be overlaid on a partial area of the first execution screen of the first application, receiving a screen capture command through the voice assistant application while the second execution screen is displayed to be overlaid on the partial area of the first execution screen, and performing, based on the screen capture command, screen capture, while the second execution screen is displayed to be overlaid on the partial area of the first execution screen, by storing an image of the first execution screen in which an image of the second execution screen is not overlaid on the partial area of the first execution screen.

### [Advantageous Effects of Invention]

According to an embodiment, the intent of a user for a screen capture request can be inferred by determining the correlation between the execution screen of a voice assistant application and the execution screen of a first application.

According to an embodiment, the execution screen of an application desired by the user can be captured by inferring the intent of the user for a screen capture request, thereby enhancing user convenience.

According to an embodiment, it is possible to determine whether to capture the screen including the execution screen of a voice assistant application or a screen excluding the execution screen of the voice assistant application's in response to a screen capture request made through speech.

### [Brief Description of Drawings]

FIG. 1 is a block diagram of an electronic device in a network environment according to an embodiment.
FIG. 2 is a block diagram of a generative artificial intelligence system according to an embodiment.
FIG. 3A and FIG. 3B are diagrams illustrating an example of processing a user's screen capture request in an electronic device according to an embodiment.
FIG. 4 is a flowchart illustrating an operation method of an electronic device according to an embodiment.
FIG. 5A is a diagram illustrating an example of capturing the execution screen of a voice assistant application in an electronic device according to an embodiment.
FIG. 5B is a diagram illustrating an example of capturing the entire screen of a display in an electronic device according to an embodiment.
FIG. 5C is a diagram illustrating an example of capturing the execution screen of a first application or the execution screen of a voice assistant application in an electronic device according to an embodiment.
FIG. 5D is a diagram illustrating an example of capturing the entire screen of a display in an electronic device according to an embodiment.
FIG. 6 is a flowchart illustrating a method for capturing a screen, based on the last user interaction, in an electronic device according to an embodiment.
FIG. 7A is a diagram illustrating an example of capturing a screen, based on the last user interaction, in an electronic device according to an embodiment.
FIG. 7B is a diagram illustrating an example of capturing a screen, based on a correlation between a voice assistant application and a first application, in an electronic device according to an embodiment.
FIG. 7C is a diagram illustrating an example of capturing the execution screen of a voice assistant application and the execution screen of a first application in an electronic device according to an embodiment.
FIG. 8 is a flowchart illustrating a method for capturing a screen, based on a sharing intent for screen capture, in an electronic device according to an embodiment.
FIG. 9A is a diagram illustrating an example of capturing a screen, based on a sharing intent for screen capture, in an electronic device according to an embodiment.
FIG. 9B is a diagram illustrating an example of capturing a screen by specifying a screen to be captured in an electronic device according to an embodiment.
FIG. 10 is a flowchart illustrating a method for capturing a screen by identifying the intent of a user who requested screen capture in an electronic device according to an embodiment.
FIG. 11 is a diagram illustrating an example of selectively storing a captured screen in an electronic device according to an embodiment.
FIG. 12 is a diagram illustrating an example of providing a captured screen image through a voice assistant application in an electronic device according to an embodiment.
FIG. 13 is a diagram illustrating an example of capturing content that exceeds the screen size in an electronic device according to an embodiment.
FIG. 14 is a diagram illustrating an example of providing an image captured through a voice assistant application in an electronic device according to an embodiment.
FIG. 15 is a diagram illustrating an example of editing an image captured through a voice assistant application in an electronic device according to an embodiment.
FIG. 16A is a diagram illustrating an example of capturing a screen through a voice assistant application in electronic devices having various sizes according to an embodiment.
FIG. 16B is a diagram illustrating an example of capturing a screen through a voice assistant application in an electronic device having various sizes according to an embodiment.

### [Mode for the Invention]

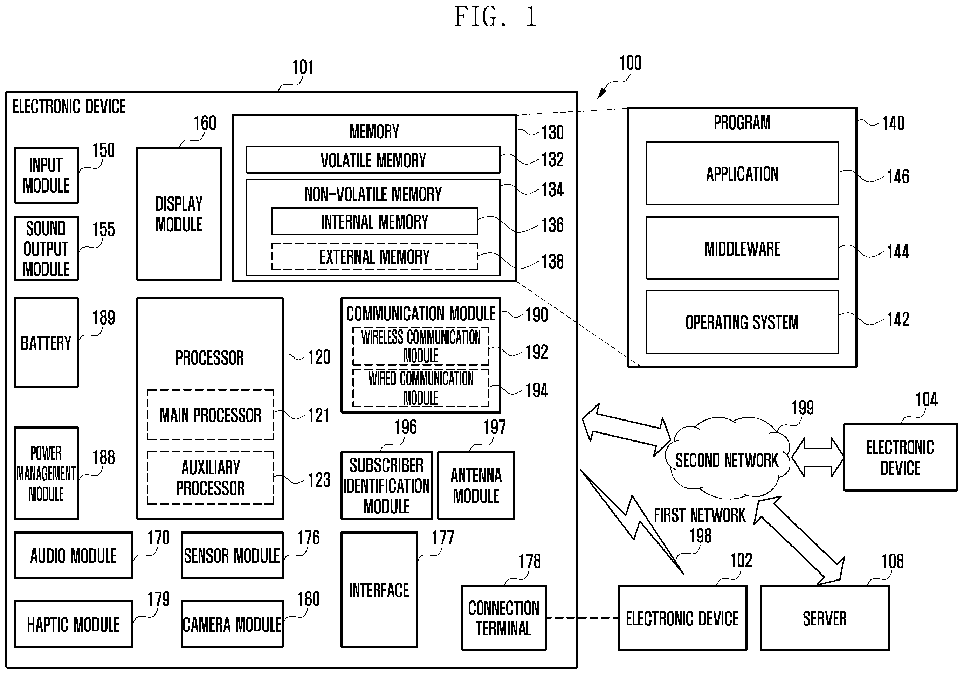

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mm Wave antenna module. According to an embodiment, the mm Wave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

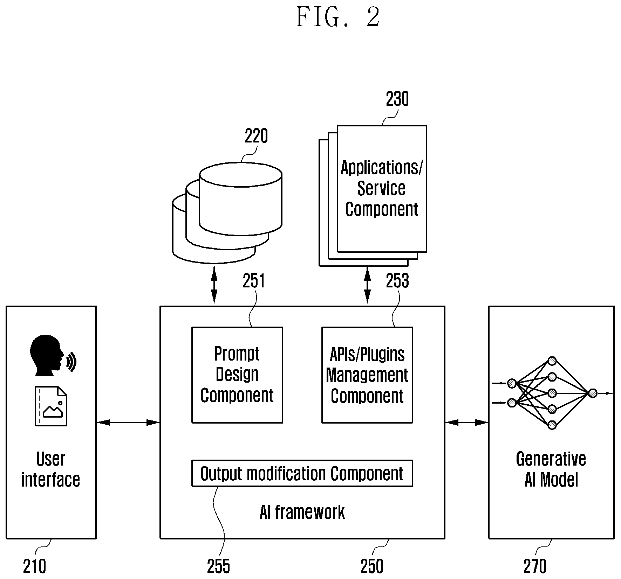

FIG. 2 is a block diagram illustrating an example of a generative artificial intelligence system according to an embodiment.

Referring to FIG. 2, a generative artificial intelligence system (e.g., an intelligent server or the server 108 in FIG. 1) according to an embodiment may include a user interface 210, a database 220, application and service components 230, an AI framework 250, and a generative AI model 270.

The user interface 210 may receive an input of a user query. The user query may have the form of natural language, images, and videos. In addition, when the user makes a query, context information may be transmitted together. As another example, the user query can be an unnatural input that does not generate natural language such as a design request or a modification. In addition, a mixed form of the above-described natural language, image, sound, and context information is also possible. Moreover, the user interface 210 may output the result of the generative artificial intelligence system to the user. The output may be in the form of natural language or a specific content, and may also be provided in the form of an action requested by the user.

The AI framework 250 may receive an input of the user query, and coordinate and control each component necessary to perform the user's intention. The AI framework 250 may include a prompt design component 251, an application and plugin (APIs/plugins) management component 253, and an output modification component 255.

The user query or action input through the user interface 210 may be transmitted to the prompt design component 251. The prompt design component 251 may be used to generate a prompt suitable for the input into a large language model (LLM) or large multimodal models. The prompt design component 251 may be an AI component that uses machine learning algorithms or neural networks to develop better prompts as time passes. The prompt design component 251 may access a knowledge component including user preference data, a prompt library, and prompt examples to generate a prompt and transfer the same to a large language model (LLM) or a large multi-modal model (LMM).

The application and plugin management component 253 may serve to perform communicating with external information if there is a request for additional information when a user input is transferred as the input of the generative model. The application and plug-in management component 253 may construct a channel capable of communicating with the outside of the AI interface through an application programming interface (API), thereby allowing access to various data sources. In addition, when an action for performing the user query rather than the intermediate result should be finally performed by an application or a service, the application and plugin management component 253 may make a request for the corresponding action through an API. The information secured from the outside may be transferred as the input of the generative model together with the user input.

The output modification component 255 may finely tune the result output from the generative model. For example, the output modification component 255 may verify whether the content generated through a language model (LLM) or a large-scale multimodal model (LMM) is irrelevant, includes biased content, or includes harmful content. In addition, the output correction component 255 may determine to which extent the output conforms to a desired result of the user, and if an additional process is needed, perform the corresponding process. Additionally, the output correction component 255 may configure a hint for avoiding an unintended output and provide the same to the user.

The generative AI model 270 generally refers to an artificial intelligence neural network that makes new types of data, depending on user input information. Typical models for generating images include a generative adversarial network (GAN) and a variational auto encoder (VAE), and recently, a diffusion-based generative model using a VAE and a Transformer structure is referred to as a generative model. In addition, the language model is a model trained to output the most appropriate output value statistically based on the input value, and examples thereof representatively include models such as CHAT-GPT 3 and CHAT-GPT 4. Moreover, the model may recognize various types of data inputs, such as text, images, and sounds, and generate new data in response thereto, and thus is called a large multimodal model (LMM).

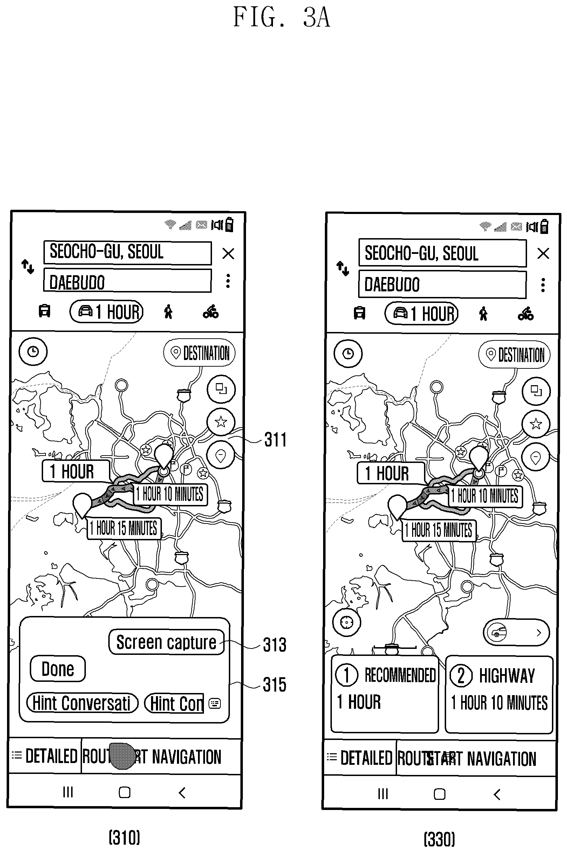

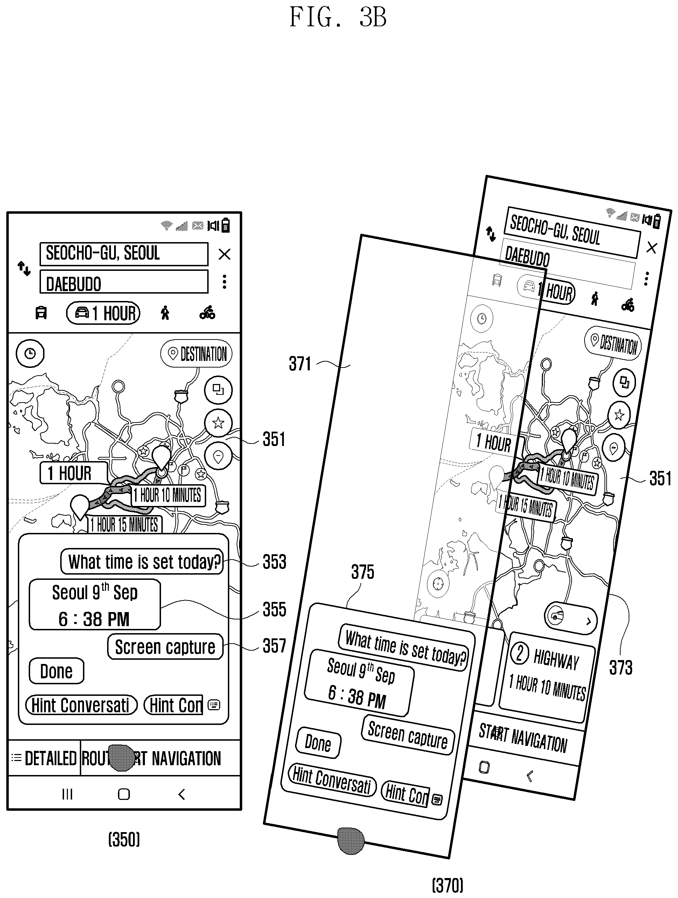

FIG. 3A and FIG. 3B are diagrams illustrating an example of processing a user's screen capture request in an electronic device according to an embodiment.

Referring to FIG. 3A, a processor (e.g., the processor 120 in FIG. 1) of an electronic device (e.g., the electronic device 101 in FIG. 1) according to an embodiment may display a first user interface 310 on a display (e.g., the display module 150 in FIG. 1), based on detecting a user input requesting screen capture (e.g., a screen capture command). The user input may be requested via a voice assistant application and may be, for example, utterances. The voice assistant application (or voice assistant service) may collect and provide customized information to the user, based on an artificial intelligence (AI) engine and voice recognition, and perform various tasks, such as schedule management, email transmission, and restaurant reservations, according to the user's voice commands.

For example, a user may utter a predetermined voice wake word (e.g., "Hi Bixby") or press a button associated with a voice assistant application. The processor 120 may detect the voice wake word obtained through a microphone (e.g., the input module 150 in FIG. 1) and execute the voice assistant application. When a button associated with a voice assistant (e.g., a software button or a physical button) is selected, the processor 120 may execute the voice assistant application. When the button is selected, the processor 120 may display a keypad on an execution screen of the executed voice assistant application. According to an embodiment, when a voice assistant is invoked by a button, the voice assistant may operate in a text-based manner (e.g., displaying a keypad), or when the voice assistant is invoked by voice, the voice assistant may operate in a voice-based manner (e.g., receiving voice commands), but the disclosure may not be limited thereto.

The first user interface 310 may include a first execution screen 311 of a first application and a second execution screen 315 of the voice assistant application displaying text 313 corresponding to a user input. The user input (or screen capture command) may include a user's utterance "Screen capture" or a text input "Screen capture" entered via a keypad. When a screen capture request is received via the voice assistant application while the first execution screen 311 of the first application (e.g., a navigation application) is being displayed, the processor 120 may display the first user interface 310. After completing the screen capture, the processor 120 may notify the user of the completion of the capture via text (e.g., "Done") or voice. The second execution screen 315 may be displayed to be partially overlaid on the first execution screen 311. The second execution screen 315 may be displayed as a foreground image on the first layer, and the first execution screen 311 may be displayed as a background image or screen on the second layer. The processor 120 may receive a screen capture command via the voice assistant application while the second execution screen 315 is displayed to be overlaid on a partial area of the first execution screen 311.

A second user interface 330 may be a captured execution screen of the first application in response to the screen capture request via the voice assistant application. The processor 120 may perform screen capture by storing an image of the first execution screen 311 based on the screen capture command while the second execution screen 315 is displayed to be overlaid on a partial area of the first execution screen 311.

According to an embodiment, the processor 120 may analyze an intent of the user who requested the screen capture and determine a screen to be captured. The user intent may be to explicitly specify the correlation between the content included in two execution screens or a screen to be captured. The user intent that specifies a screen to be captured may include touching (or currently focusing) the screen to be captured, or uttering (e.g., "Capture the current screen," or "Capture the voice assistant screen"). As another example, the processor 120 may analyze the correlation between the execution screens of the voice assistant application and the first application as part of the user intent analysis. Based on the analyzed user intent, the processor 120 may determine whether to capture the entire screen of the display (e.g., the first user interface 310), or capture the first execution screen (e.g., the second user interface 330) or the second execution screen 315 of the voice assistant application (e.g., capture each screen or only one screen at a time).

The correlation may be a determination of whether the first content (or first text) included in the first execution screen corresponds to the second content (or second text) included in the second execution screen. Whether the first content corresponds to the second content may include whether the first content matches (or is similar to) the second content by at least a specified range. For example, the first content and the second content may each include at least one of text, an image, or a video.

When the first content and the second content are "text," the processor 120 may determine how closely the text of the first content matches the text of the second content. For example, the processor 120 may determine whether the number of identical texts (e.g., words) between the first content and the second content is equal to or greater than a specified number (e.g., 3), or whether the ratio of identical text to the total text is equal to or greater than a specified ratio (e.g., 30%). Alternatively, when the first content and the second content are "images (or videos)," the processor 120 may analyze the images of the first content and the images of the second content to determine the identity or similarity between them. For example, the processor 120 may determine whether the number of identical objects (e.g., images) or objects of the same category is equal to or greater than a specified number, or determine whether the ratio of identical images, objects of the same category, or similar images to all images is equal to or greater than a specified ratio (e.g., 50%). The processor 120 may also determine the correlation between the first content and the second content in a similar manner as described above even when both text and images (or videos) are included in the first content and the second content.

If there is a correlation between the first content included in the first execution screen 311 and the second content included in the second execution screen 315 (e.g., the first content corresponds to the second content), the processor 120 may perform a screen capture by storing the image of the first execution screen and the image of the second execution screen. Capturing the first execution screen 311 and the second execution screen 315 may mean capturing the first execution screen 311 and the second execution screen 315 separately, and capturing the first execution screen 311 and the second execution screen 315 together (e.g., capturing them as shown in the first user interface 310). The image of the first execution screen 311 may include the entire image of the first execution screen 311 that is not obscured by the image of the second execution screen 315. The image of the second execution screen 315 may include the entire image of the second execution screen 315 that is not obscured by the image of the first execution screen 311.

The processor 120 may capture the first execution screen 311 and the second execution screen 315 separately, or capture the entire screen of the display module 160 (e.g., a screen in which the second execution screen 315 is overlaid on a partial area of the first execution screen 311) as a single image. The entire screen (e.g., the first user interface 310) of the display module 160 may be a screen in which the second execution screen 315 is overlaid on a partial area of the first execution screen 311. When a screen capture command is received through the voice assistant application while the first execution screen 311 is displayed, if there is a correlation between the first content included in the first execution screen 311 and the second content included in the second execution screen 315, the processor 120 may determine that the user intent is to capture the execution screens of both the voice assistant application and the first application, and then capture the execution screens of both applications.

According to an embodiment, the processor 120 may determine whether to capture the image of the first execution screen and the image of the second execution screen separately, or capture the entire screen of the display module 160 as a single image, depending on whether the second execution screen of the voice assistant application is larger or smaller than a specified size of the display module 160. For example, if the second execution screen is equal to or greater than a specified size of the display module 160 (e.g., 50%, 55%, 60%, or more), the processor 120 may capture the first execution screen and the second execution screen separately. Alternatively, if the second execution screen of the voice assistant application is smaller than a specified size of the display module 160, the processor 120 may capture only the first execution screen.

Alternatively, if there is no correlation between the first content included in the first execution screen and the second content included in the second execution screen (e.g., the first content does not correspond to the second content), the processor 120 may capture the first execution screen 311. When a screen capture command is received through the voice assistant application while the first execution screen 311 is displayed, if there is no correlation between the first content included in the first execution screen 311 and the second content included in the second execution screen, the processor 120 may determine that the user intent is to capture the first execution screen 311 and capture the first execution screen 311. If there is no correlation between the first content included in the first execution screen 311 and the second content included in the second execution screen 315, the processor 120 may determine that the user intent is to capture only the second execution screen 315 and capture the second execution screen 315.

Referring to FIG. 3B, in response to a screen capture request via the voice assistant application, the processor 120 may determine whether to capture the first execution screen and the second execution screen (e.g., the third user interface 350) as a single image, the first execution screen (e.g., the second user interface 330), or the second execution screen 375, based on the last user interaction. The first execution screen 351 and the second execution screen 375 may both be captured and stored by a single capture command, or only one screen (e.g., either the first execution screen 351 or the second execution screen 375) may be stored. For example, while displaying the first execution screen 351, the processor 120 may receive a first user query (or first user input) via the voice assistant application.

Here, the first user query is not a screen capture request, but rather may be "What time is set today?". The processor 120 may display the second execution screen of the voice assistant application, including the first text 353 corresponding to the first user query, on the display module 160. When a user query is received via the voice assistant application while the first execution screen 351 is displayed, the processor 120 may provide the second execution screen 375 of the voice assistant application as a pop-up window or display the second execution screen 375 to be overlaid on the first execution screen 351.

Referring to reference numeral 370, the second execution screen 375 may be displayed as a foreground image on the first layer 371, and the first execution screen 351 may be displayed as a background image on the second layer 373. The first layer 371 may be displayed on (e.g., top of) the second layer 373. The processor 120 may display the second execution screen 375 on the first execution screen 351. The second execution screen 375 may be provided as a pop-up window, so that an area of the first execution screen 351 obscured by the pop-up window (e.g., the lower area of the execution screen 351 of the first application) may not be visible to the user.

The processor 120 may obtain first result data in response to the first user query through the voice assistant application and display a second execution screen of the voice assistant application, including second text 355 corresponding to the first result data, on the display module 160. Furthermore, the processor 120 may output voice corresponding to the first result data to a speaker (e.g., the audio output module 155). After displaying the second text 355, the processor 120 may receive a second user query requesting screen capture. The second user query may be a screen capture command (or request). The processor 120 may display a second execution screen of the voice assistant application, including third text 357 corresponding to the second user query, on the display module 160.

The third user interface 350 may display the second execution screen of the voice assistant application, including the third text 357 corresponding to the second user query, to be overlaid on a partial area of the first execution screen 351. Since the last user interaction (e.g., the first user query 353) has been detected before requesting screen capture (e.g., the second user query 357) in the voice assistant application, the processor 120 may capture the entire screen (e.g., the third user interface 350) of the display module 160 or the second execution screen 375 of the voice assistant application.

The second execution screen 375 of the voice assistant application may be displayed on the entire screen of the display module 160 or a portion of the display module 160. The processor 120 may capture the entire screen of the display module 160 including the second execution screen 375 or a partial screen of the display module 160 including only the second execution screen 375 of the voice assistant application (e.g., a partial screen of the display module 160). Alternatively, the processor 120 may capture the entire screen of the display module 160 including the second execution screen 375 and store it to correspond to the size of the second execution screen 375 (e.g., a partial screen of the display module 160).

According to an embodiment, in response to the screen capture request through the voice assistant application, the processor 120 may determine, based on a sharing intent for screen capture, whether to capture the entire screen of the display module 160 (e.g., the third user interface 350), the execution screen of the first application (e.g., the second user interface 330), or the second execution screen 375 of the voice assistant application, or capture the first execution screen (e.g., the second user interface 330) and the second execution screen 375 separately. Alternatively, when there is a sharing intent for screen capture, the processor 120 may determine whether the screen to be captured includes personal information and, based on whether the personal information is included, determine whether to capture the entire screen of the display module 160 (e.g., the third user interface 350), the execution screen of the first application (e.g., the second user interface 330), or the second execution screen 375 of the voice assistant application. The processor 120 may store the captured screen (e.g., the entire screen of the display module 160, the execution screen of the first application, or the second execution screen 375 of the voice assistant application) in the memory 130.

An electronic device 101 according to an embodiment of the disclosure may include a display 160, a processor 120, and a memory 130, and instructions stored in the memory may cause, when executed by the processor, the electronic device to display, on the display, a first execution screen of a first application, display, on the display, a second execution screen of a voice assistant application to be overlaid on a partial area of the first execution screen of the first application, receive a screen capture command through the voice assistant application while the second execution screen is displayed to be overlaid on the partial area of the first execution screen, and perform, based on the screen capture command, screen capture, while the second execution screen is displayed to be overlaid on the partial area of the first execution screen, by storing an image of the first execution screen in which an image of the second execution screen is not overlaid on the partial area of the first execution screen.

The second execution screen may be displayed as a foreground image on a first layer, and the first execution screen may be displayed as a background image on a second layer.

The instructions may cause, when executed by the processor, the electronic device to analyze a user intent, based on the screen capture command, and perform, based on the analyzed user intent, screen capture, while the second execution screen is displayed to be overlaid on the partial area of the first execution screen, by storing at least one of (1) an image of the first execution screen in which the image of the second execution screen is not overlaid on the partial area of the first execution screen, (2) an image of the second execution screen, or (3) an image in which the image of the second execution screen is overlaid on the partial area of the first execution screen.

The instructions may cause, when executed by the processor, the electronic device to perform, based on the screen capture command, screen capture, while the second execution screen is displayed to be overlaid on the partial area of the first execution screen, by storing the image of the first execution screen and the image of the second execution screen overlaid on the partial area of the first execution screen.

The instructions may cause, when executed by the processor, the electronic device to determine whether first text included in the first execution screen is related to second text included in the second execution screen, perform screen capture by storing the image of the first execution screen and the image of the second execution screen when the first text is related to the second text, and perform screen capture by storing the image of the first execution screen, instead of storing the image of the second execution screen, when the first text is not related to the second text.

The instructions may cause, when executed by the processor, the electronic device to perform screen capture, based on the screen capture command, by storing the image of the first execution screen on which the image of the second execution screen is not overlaid and the image of the second execution screen when the second execution screen is equal to or greater than a specified size of the display.

The instructions may cause, when executed by the processor, the electronic device to determine whether the last user interaction prior to receiving the screen capture command is the first execution screen or the second execution screen, perform, based on the screen capture command, screen capture by storing the image of the first execution screen in which the image of the second execution screen is not overlaid on the partial area of the first execution screen when the last user interaction is the first execution screen, and perform screen capture by storing the image of the first execution screen on which the image of the second execution screen is not overlaid and the image of the second execution screen when the last user interaction is the second execution screen.

The instructions may cause, when executed by the processor, the electronic device to determine whether the screen capture command includes an intent for sharing the screen capture, perform screen capture by storing the image of the first execution screen and the image of the second execution screen when the screen capture command does not include a sharing intent,

The instructions may cause, when executed by the processor, the electronic device to determine whether second text included in the second execution screen includes personal information when the screen capture command includes a sharing intent, and perform screen capture by storing the image of the first execution screen when the second text includes personal information.

The instructions may cause, when executed by the processor, the electronic device to display preview images of captured screens in a thumbnail format after the screen capture, and store a captured image selected by a user from the preview images.

The instructions may cause, when executed by the processor, the electronic device to detect a user input for editing after selecting the captured image, and provide a user interface for editing the selected captured image in response to the user input for editing.

The instructions may cause, when executed by the processor, the electronic device to store the captured image of the second execution screen while associating content included in the second execution screen with the image of the second execution screen.

The instructions may cause, when executed by the processor, the electronic device to store, when performing a screen capture on the image of the second execution screen, in a case where a portion of content included in the second execution screen extends beyond a display area of the display, the entire content included in an area displayed on the display and an area not displayed on the display.

The instructions may cause, when executed by the processor, the electronic device to group and display images obtained by capturing the execution screen of the voice assistant application on an execution screen of an image storage application, display an indicator indicating that there are other images captured along with the execution screen of the voice assistant application, display, when the indicator is selected, a representative captured image from among the grouped images, and display the other grouped images in a thumbnail format.

The instructions may cause, when executed by the processor, the electronic device to provide an editing interface for separating the image of the first execution screen from the image of the second execution screen when the captured image is the image of the second execution screen overlaid on the partial area of the first execution screen.

The instructions may cause, when executed by the processor, the electronic device to receive a screen capture command through the voice assistant application while execution screens of a plurality of applications are displayed through multiple windows, perform screen capture by storing an image of the execution screen of the application in a currently focused window, or determine whether third text included in the execution screen of the application in the currently focused window is related to second text included in the execution screen of the voice assistant application, perform screen capture by storing the image of the second execution screen and the image of the execution screen of the application in the currently focused window when the third text is related to the second text, and perform screen capture by storing the image of the execution screen of the application in the currently focused window, instead of storing the image of the second execution screen, when the third text is not related to the second text.

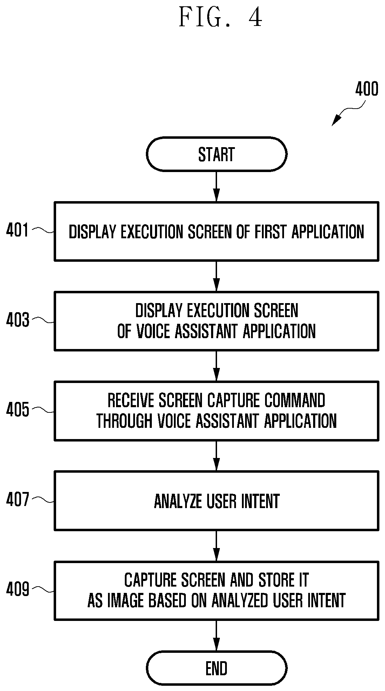

FIG. 4 is a flowchart 400 illustrating an operation method of an electronic device according to an embodiment.

Referring to FIG. 4, in operation 401, a processor (e.g., the processor 120 in FIG. 1) of an electronic device (e.g., the electronic device 101 in FIG. 1) according to an embodiment may display an execution screen (e.g., a first execution screen) of a first application on a display (e.g., the display module 160 in FIG. 1). For example, the first application may include all applications except a voice assistant application. For example, the first application may be an Internet search application, a messenger application, or a video streaming application.

In operation 403, the processor 120 may display an execution screen (e.g., a second execution screen) of the voice assistant application on the display module 160. The voice assistant application (or voice assistant service) may collect and provide customized information to the user, based on an artificial intelligence (AI) engine and voice recognition, and perform various tasks, such as schedule management, email transmission, and restaurant reservations, according to the user's voice commands. For example, a user may utter a predetermined voice wake word (e.g., "Hi Bixby") or press a button associated with the voice assistant application. The processor 120 may detect the voice wake word obtained through a microphone (e.g., the input module 150 in FIG. 1) and execute the voice assistant application. The second execution screen may be displayed to be overlaid on a partial area of the first execution screen. For example, the second execution screen may be displayed as a pop-up window to be overlaid on a portion of the first execution screen. The second execution screen may be displayed as a foreground image on the first layer, and the first execution screen may be displayed as a background image on the second layer.

In operation 405, the processor 120 may receive a screen capture command through the voice assistant application. The screen capture command may be requested through the voice assistant application, and may include, for example, a user utterance such as "Screen capture" or "Take a screen capture", or a text input such as entering the text "screen capture" through a keypad. The processor 120 may receive a screen capture request from the user through the voice assistant application while displaying the first execution screen of the first application.

In operation 407, the processor 120 may analyze a user intent based on the screen capture command. The processor 120 may analyze whether the user intent is to capture an image of the first execution screen, an image of the second execution screen, or an intent to capture both images of the first execution screen and the second execution screen. The user intent may explicitly specify a correlation between content included in two execution screens or a screen to be captured. The user intent specifying the screen to be captured may include touching (or currently focusing) the screen to be captured, or uttering (e.g., "Capture the current screen," or "Capture the voice assistant screen").

According to an embodiment, one method of analyzing the user intent may be determining whether there is a correlation between the first text (or first content) included in the first execution screen and the second text (or second content) included in the second execution screen. Although text is described by way of example, the first content and the second content may each include at least one of text, an image, or a video.

According to an embodiment, when the first content and the second content are "text," the processor 120 may determine how closely the text of the first content matches the text of the second content. For example, the processor 120 may determine whether the number of identical texts (e.g., words) between the first content and the second content is equal to or greater than a specified number (e.g., 3), or whether the ratio of identical text to the total text is equal to or greater than a specified ratio (e.g., 30%). Alternatively, when the first content and the second content are "images (or videos)," the processor 120 may analyze the images of the first content and the images of the second content to determine the identity or similarity between them. For example, the processor 120 may determine whether the number of identical images is equal to or greater than a specified number, or whether the ratio of identical images or similar images to all images is equal to or greater than a specified ratio (e.g., 50%). The processor 120 may also determine the correlation between the first content and the second content in a similar manner as described above even when both text and images (or videos) are included in the first content and the second content.

According to an embodiment, another method of analyzing the user intent may include the user explicitly specifying an execution screen to be captured. For example, the processor 120 may specify a screen capture command such as "Capture the first execution screen" or "Capture the first application screen."

In operation 409, the processor 120 may capture the screen and store it as an image, based on the analyzed user intent. When a screen capture request is made via the voice assistant application while the execution screen of the first application is displayed, the processor 120 may analyze the correlation between the execution screens of the voice assistant application and the first application as part of user intent analysis. The correlation may be a determination of whether the first content (or first text) included in the first execution screen of the first application corresponds to the second content (or second text) included in the second execution screen of the voice assistant application.

If there is a correlation between the second content and the first content, the processor 120 may determine that the user intends to capture the execution screens of both the voice assistant application and the first application, and then capture the execution screens of both applications. For example, the processor 120 may capture the first execution screen and the first execution screen separately, or capture the entire screen of a display (e.g., the display module 160 in FIG. 1) as a single image. Since the entire screen of the display module 160 shows the second execution screen of the voice assistant application being displayed on the first execution screen of the first application, the first execution screen of the first application and the second execution screen of the voice assistant application may partially overlap.

According to an embodiment, if the first content does not correspond to the second content, the processor 120 may capture the execution screen of the first application. When a screen capture request is received through the voice assistant application while the execution screen of the first application is displayed, if there is no correlation between the execution screens of the voice assistant application and the first application, the processor 120 may determine that the user intends to capture the execution screen of the first application and then capture the execution screen of the first application.

According to an embodiment, in response to the screen capture request through the voice assistant application, the processor 120 may determine the screen to be captured (e.g., the execution screen of the voice assistant application or the execution screen of the first application), based on the last user interaction. Alternatively, the processor 120 may determine the screen to be captured based on the sharing intent for screen capture in response to the screen capture request via the voice assistant application. Alternatively, when there is a sharing intent for screen capture, the processor 120 may determine whether the screen to be captured includes personal information and determine the screen to be captured based on whether the personal information is included.

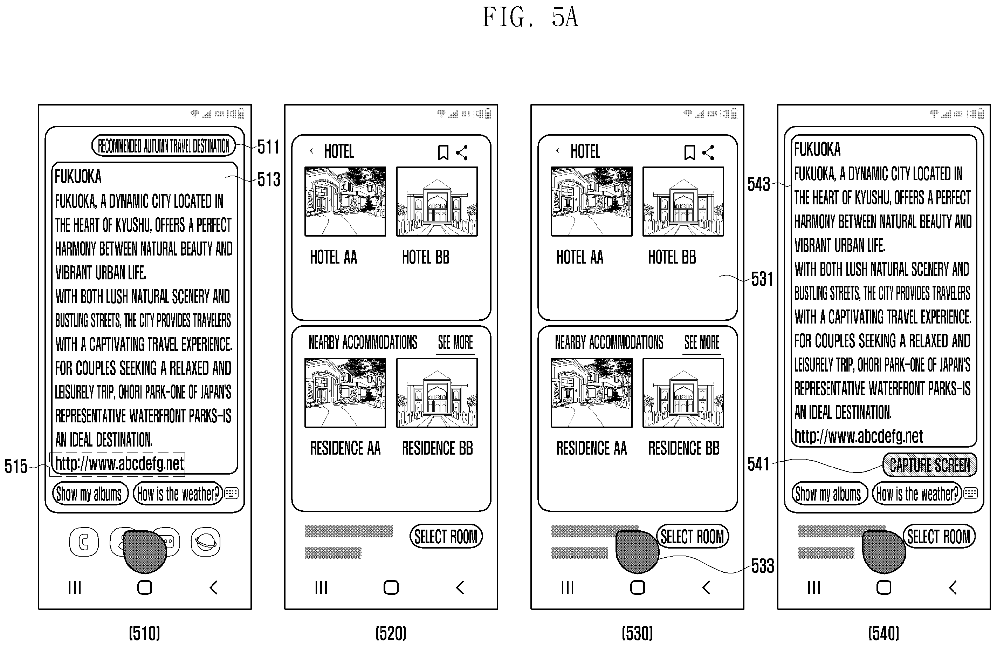

FIG. 5A is a diagram illustrating an example of capturing the execution screen of a voice assistant application in an electronic device according to an embodiment.

Referring to FIG. 5A, a processor (e.g., the processor 120 in FIG. 1) of an electronic device (e.g., the electronic device 101 in FIG. 1) according to an embodiment may display a first user interface 510 including an execution screen of the voice assistant application on a display (e.g., the display module 160 in FIG. 1). The first user interface 510 may be the execution screen of the voice assistant application and may include first result data 513 corresponding to a first user query 511. The first user query 511 may be a user input, which may correspond to, for example, a voice command obtained through a microphone (e.g., the input module 150 in FIG. 1). The processor 120 may display text corresponding to the first user query 511 on the voice assistant application. The first result data 513 may include the output of a generative artificial intelligence system in response to the first user query 511. The first result data 513 may be configured in a natural language format or a specific content format, and may also be provided in the form of an action requested by the user. The processor 120 may display text and/or an image corresponding to the first result data 513 on the voice assistant application.

In response to a user input for selecting URL information 515 included in the first result data 513, the processor 120 may display a second user interface 520 on the display module 160. The second user interface 520 may not display the execution screen of the voice assistant application, but may include an execution screen of an Internet search application. The first user interface 510 may display a large amount of content, so it may appear that the voice assistant screen is displayed on the entire screen and then switches to the Internet. However, even when displayed as a pop-up screen, the pop-up screen may disappear when URL information 515 is selected.

The execution screen of the Internet search application may include accommodation information in a specific region (e.g., Fukuoka). The processor 120 may receive a user input for invoking the voice assistant application from the user while displaying the execution screen of the Internet search application. The user input may be uttering a predetermined voice wake word or selecting a button related to the voice assistant application.

When the user input is detected while displaying the execution screen of the Internet search application, the processor 120 may display, on the display module 160, a third user interface 530 including an indicator 533 indicating that the voice assistant application is invoked. The third user interface 530 may include an indicator 533 indicating that the voice assistant application is invoked on the execution screen 531 of the Internet search application. The processor 120 may receive a second user query 541 requesting screen capture while displaying the third user interface 530.

In response to the second user query 541, the processor 120 may display a fourth user interface 540 on the display module 160. The fourth user interface 540 is an execution screen of the voice assistant application and may include text (e.g., "Capture the screen") corresponding to the second user query 541. The execution screen of the voice assistant application may include text corresponding to the first user query, the first result data, or the second user query 541, respectively. The processor 120 may store conversation information of the voice assistant application in a memory (e.g., the memory 130 in FIG. 1) for a specified period of time (e.g., 10 minutes, 1 hour, or 1 day) immediately before (or prior to) detecting the second user query 541. When the second user query 541 is detected within the specified period of time, the processor 120 may display the stored conversation information 543 along with the text corresponding to the second user query on the voice assistant application.

The processor 120 may capture the execution screen of an Internet search application, based on the second user query 541. The processor 120 may determine the screen to capture, based on the last user interaction immediately before receiving the second user query 541 requesting the screen capture. The last user interaction immediately before receiving the second user query 541 may be detected (or generated) from the execution screen of the Internet search application, such as the second user interface 520. In this case, the processor 120 may capture only the execution screen of the Internet search application, instead of capturing the execution screen of the voice assistant application displayed on the display module 160, in response to the second user query 541. The processor 120 may store the captured image (e.g., the execution screen of the Internet search application) in the memory (e.g., the memory 130 in FIG. 1).

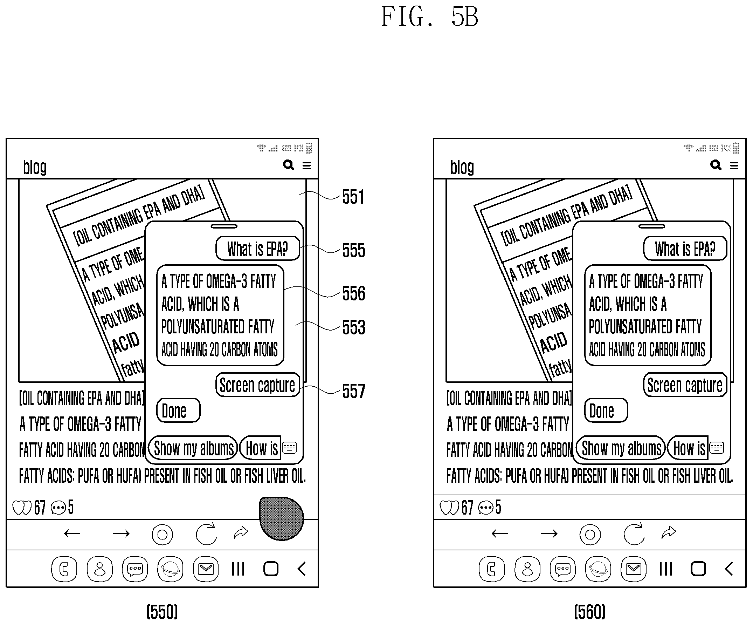

FIG. 5B is a diagram illustrating an example of capturing the entire screen of a display in an electronic device according to an embodiment.

Referring to FIG. 5B, when a screen capture request is received via the voice assistant application while displaying an execution screen 551 of a first application (e.g., an Internet search application), the processor 120 may display a fifth user interface 550 on the display module 160. The fifth user interface 550 may include an execution screen 553 of the voice assistant application on the execution screen 551 of the first application. After providing first result data 556 in response to a first user query 555, the processor 120 may receive a second user query 557 requesting screen capture. For example, the user may view a web page (e.g., displaying the execution screen 551 of the first application) and inquire about the meaning of "EPA" via the voice assistant application, as the word "EPA" is unfamiliar to the user. A user input asking what "EPA" is may correspond to the first user query 555.

When the processor 120 receives a second user query 557 after providing first result data 556 for the first user query 555, it may determine that the last user interaction was detected in the voice assistant application. In this case, the processor 120 may determine whether the first content included in the execution screen 553 of the voice assistant application corresponds to the second content included in the execution screen 551 of the first application. Whether the first content corresponds to the second content may include whether the first content matches the second content by at least a specified range. For example, the first content and the second content may each include at least one of text, an image, or a video. For example, when the first content and the second content are "text," the processor 120 may determine how closely the text of the first content matches the text of the second content. For example, the processor 120 may determine whether the number of identical texts (e.g., words) between the first content and the second content is equal to or greater than a specified number (e.g., 3), or whether the ratio of identical text to the total text is equal to or greater than a specified ratio (e.g., 30%).

When the first content included in the execution screen 553 of the voice assistant application corresponds to the second content included in the execution screen 551 of the first application (e.g., the first content matches the second content by at least a specified range), the processor 120 may capture the entire screen of the display module 160 in response to the screen capture request. The processor 120 may capture the entire screen of the display module 160, such as a sixth user interface 560. The processor 120 may store the captured image (e.g., the sixth user interface 560) in the memory 130.

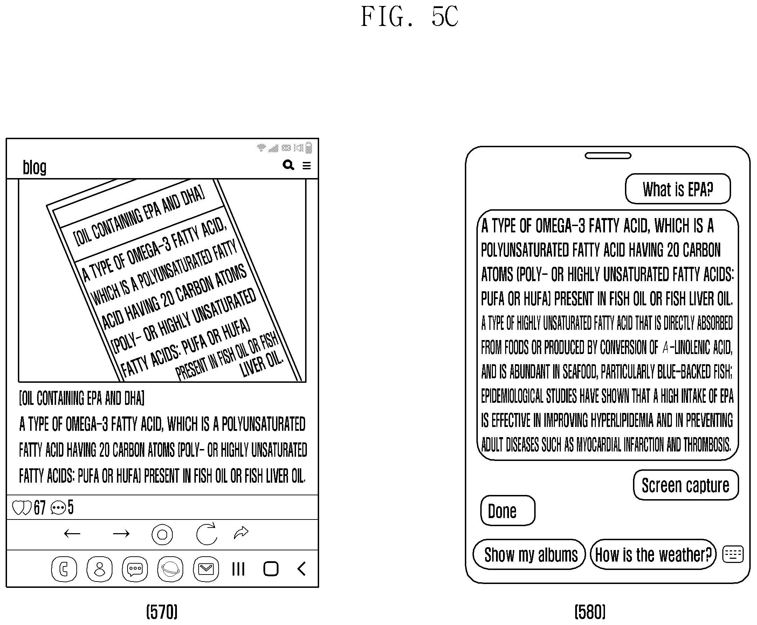

FIG. 5C is a diagram illustrating an example of capturing the execution screen of a first application or the execution screen of a voice assistant application in an electronic device according to an embodiment.

Referring to FIG. 5C, when the first content included in the execution screen 553 of the voice assistant application corresponds to the second content included in the execution screen 551 of the first application, the processor 120 may capture the execution screen of the first application or the execution screen of the voice assistant application in response to the screen capture request. For example, a seventh user interface 570 may include the execution screen of the first application. Furthermore, an eighth user interface 580 may include the execution screen of the voice assistant application. The processor 120 may store the captured image (e.g., the seventh user interface 570 or the eighth user interface 580) in the memory 130.

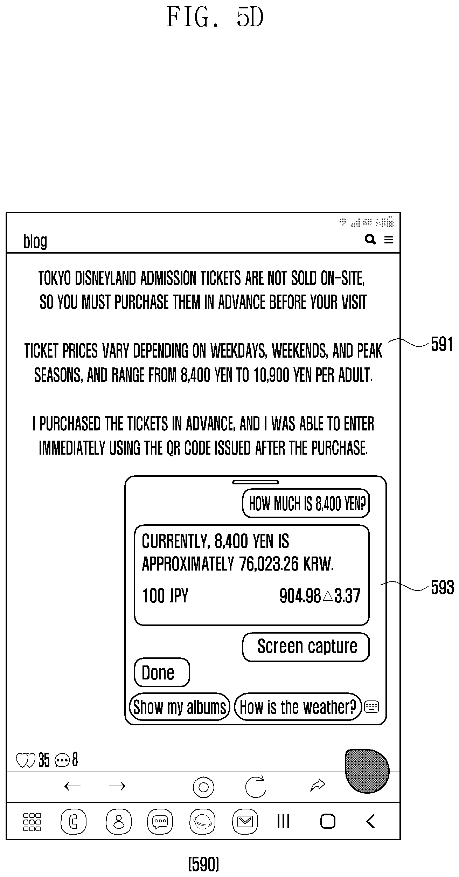

FIG. 5D is a diagram illustrating an example of capturing the entire screen of a display in an electronic device according to an embodiment.

Referring to FIG. 5D, when the first content included in the execution screen 593 of the voice assistant application corresponds to the second content included in the execution screen 591 of the first application (e.g., an Internet search application), the processor 120 may capture the entire screen of the display module 160 in response to a user's screen capture request via the voice assistant application. A ninth user interface 590 may include the entire screen of the display module 160. Alternatively, when the first content included in the execution screen 593 of the voice assistant application corresponds to the second content included in the execution screen 591 of the first application, the processor 120 may capture the execution screen 593 of the voice assistant application and the execution screen 591 of the first application separately. The processor 120 may store the captured image (e.g., the execution screen 593 of the voice assistant application or the execution screen 591 of the first application) in the memory 130.

According to an embodiment, if the execution screen 593 of the voice assistant application is equal to or greater than a specified size of the display module 160 (e.g., 50%, 55%, 60%, or more), the processor 120 may capture the execution screen 593 of the voice assistant application and the execution screen 591 of the first application separately. Alternatively, if the execution screen 593 of the voice assistant application is smaller than a specified size of the display module 160, the processor 120 may capture only the execution screen 591 of the first application.

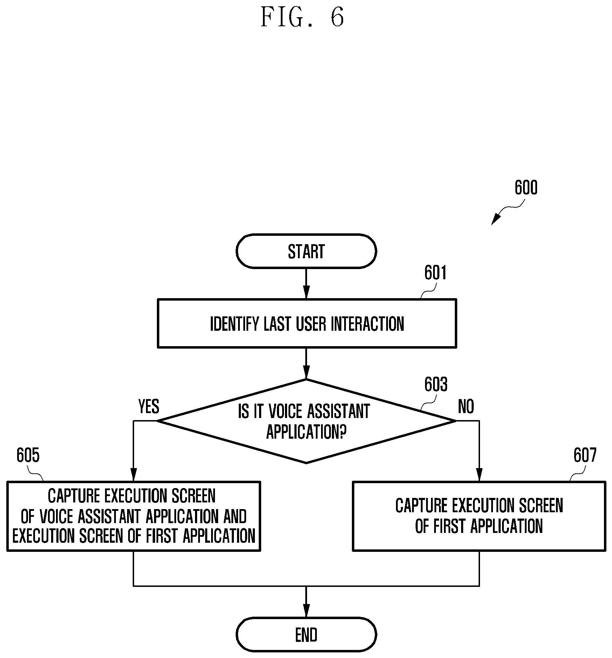

FIG. 6 is a flowchart 600 illustrating a method for capturing a screen, based on the last user interaction, in an electronic device according to an embodiment. FIG. 6 shows a method for capturing a screen, which may be performed alone, or may be performed prior to operation 401 in FIG. 4 or when "Yes" is determined in operation 403 in FIG. 4.

Referring to FIG. 6, in operation 601, a processor (e.g., processor 120 in FIG. 1) of an electronic device (e.g., the electronic device 101 in FIG. 1) according to an embodiment may identify the last user interaction. The last user interaction may refer to a user input immediately prior to requesting a screen capture via the voice assistant application. The user input may include an input by touching a display (e.g., the display module 160 in FIG. 1), an input by pressing a physical button, or a voice command (e.g., a user query).

In operation 603, the processor 120 may determine whether the identified last interaction was detected in the voice assistant application. The user may request a screen capture while the execution screen of the first application is displayed, or request a screen capture while the execution screen of the voice assistant application is displayed. For example, if a screen capture is requested while the execution screen of the first application is displayed, the last user interaction may be detected on the execution screen of the first application. Alternatively, if a screen capture is requested while the execution screen of the voice assistant application is displayed, the last user interaction may be detected on the execution screen of the voice assistant application.

The processor 120 may perform operation 605 when the identified last interaction is detected in the voice assistant application, and perform operation 607 when the identified last interaction is not detected in the voice assistant application.

If the identified last interaction is detected in the voice assistant application, the processor 120 may capture the execution screens of the voice assistant application and the first application in operation 605. The processor 120 may store the captured images in the memory (e.g., the memory 130 in FIG. 1). The captured images may be the execution screens of the voice assistant application and the first application.

If the identified last interaction is not detected in the voice assistant application, the processor 120 may capture the execution screen of the first application in operation 607. The processor 120 may store the captured image, which is the execution screen of the first application, in the memory 130. If the identified last interaction is not detected in the voice assistant application, the identified last interaction may be detected in the first application. In this case, the processor 120 may capture only the execution screen of the first application instead of capturing the execution screen of the voice assistant application.

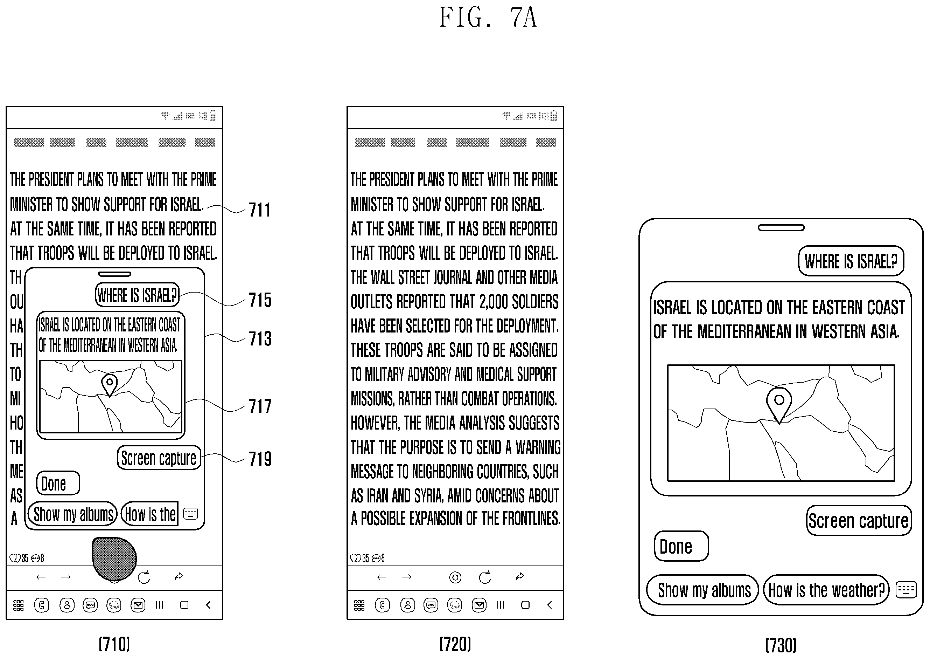

FIG. 7A is a diagram illustrating an example of capturing a screen, based on the last user interaction, in an electronic device according to an embodiment.

Referring to FIG. 7A, a processor (e.g., the processor 120 in FIG. 1) of an electronic device (e.g., the electronic device 101 in FIG. 1) according to an embodiment may display a first user interface 710 on a display (e.g., the display module 160 in FIG. 1) when screen capture is requested via the voice assistant application while displaying an execution screen 711 of a first application (e.g., an Internet search application). The first user interface 710 may include an execution screen 713 of the voice assistant application on the execution screen 711 of the first application. The processor 120 may provide first result data 717 in response to a first user query 715, and then receive a second user query 719 requesting screen capture. For example, the user may be curious about the location of "Israel" while viewing a web page (e.g., displaying the execution screen 711 of the first application), and inquire about the location of "Israel" using the voice assistant application. The user input inquiring about the location of "Israel" may correspond to the first user query 715. The execution screen 713 of the voice assistant application may include text corresponding to the first user query 715, and text and an image corresponding to the first result data 717.

When a second user query 719 is received after providing the first result data 717 for the first user query 715, the processor 120 may determine that the last user interaction was detected in the voice assistant application. In this case, the processor 120 may determine whether the first content included in the execution screen 713 of the voice assistant application corresponds to the second content included in the execution screen 711 of the first application. Whether the first content corresponds to the second content may include whether the first content matches the second content by at least a specified range. For example, the first content and the second content may each include at least one of text, an image, or a video. For example, when the first content and the second content are "text," the processor 120 may determine how closely the text of the first content matches the text of the second content. For example, the processor 120 may determine whether the number of identical texts (e.g., words) between the first content and the second content is equal to or greater than a specified number (e.g., 3), or whether the ratio of identical text to the total text is equal to or greater than a specified ratio (e.g., 30%).

When the first content included in the execution screen 713 of the voice assistant application corresponds to the second content included in the execution screen 711 of the first application (e.g., the first content matches the second content by at least a specified range), the processor 120 may capture the execution screen of the voice assistant application and the execution screen of the first application in response to the screen capture request. For example, a second user interface 720 may include the execution screen of the first application. Furthermore, a third user interface 730 may include the execution screen of the voice assistant application. The processor 120 may store the captured image (e.g., the second user interface 720 or the third user interface 730) in the memory (e.g., the memory 130 in FIG. 1).

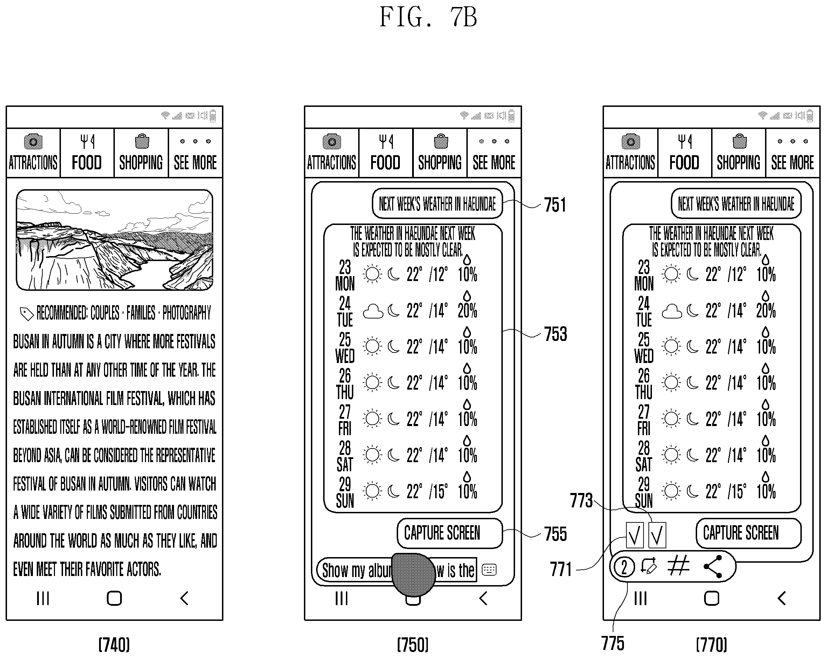

FIG. 7B is a diagram illustrating an example of capturing a screen, based on a correlation between a voice assistant application and a first application, in an electronic device according to an embodiment.

Referring to FIG. 7B, the processor 120 may display a fourth user interface 740 including an execution screen of a first application (e.g., a travel application) on the display module 160. A fourth user interface 740 may be an execution screen of the travel application and may include information introducing a specific region (e.g., Busan). The processor 120 may receive a first user query from the user via the voice assistant application while displaying the execution screen of the travel application. The user may be curious about the weather in a specific region while viewing introduction information about that region, and then inquire about "the weather in Haeundae next week" using the voice assistant application.

The user input for inquire about "the weather in Haeundae next week" may correspond to the first user query 751. A fifth user interface 750, which is the execution screen of the voice assistant application, may include text corresponding to the first user query 751, and text and an image corresponding to first result data 753 in response to the first user query 751. After providing the first result data 753 for the first user query 751, the processor 120 may receive a second user query 755 requesting screen capture. The fifth user interface 750 may further include text corresponding to the second user query 755.

The processor 120 may determine the screen to be captured based on the last user interaction immediately prior to receiving the second user query 755. The last user interaction immediately prior to receiving the second user query 755 may be detected (or generated) on the execution screen of the voice assistant application, as shown in the fifth user interface 750. In this case, the processor 120 may determine whether the first content included in the execution screen of the voice assistant application (e.g., the fifth user interface 750) corresponds to the second content included in the execution screen of the travel application (e.g., the fourth user interface 740). Whether the first content corresponds to the second content may include whether the first content matches (is similar to) the second content by at least a specified range.

The processor 120 may determine that, although Haeundae and Busan are not identical words, Haeundae is geographically part of Busan and that there is a connection between the introduction information about the region and weather information. When there is a correlation between the execution screen of the voice assistant application and the execution screen of the travel application, the processor 120 may capture the execution screen of the voice assistant application and the execution screen of the travel application. A sixth user interface 770 may display a preview image of the captured screen in a thumbnail format on the execution screen of the voice assistant application. A first thumbnail image 771 included in the sixth user interface 770 may be the execution screen of the voice assistant application, and a second thumbnail image 773 may be the execution screen of the travel application.

The user may select the screen desired to capture using the thumbnail images. For example, when a screen capture command is received, the processor 120 may display the entire screen, the execution screen of the voice assistant application, and the execution screen of the travel application as thumbnail images, respectively, and store only the thumbnail images selected by the user as captured screens (e.g., by placing a check mark on the thumbnail images). In addition, when a current screen capture is requested, a menu item 775 may be displayed, as in the sixth user interface 770. The menu item 775 may include a menu for editing the captured image or a scroll capture menu. The menu item 775 may be displayed when a screen capture command is received and then disappear after a predetermined period of time (e.g., by removing the display).

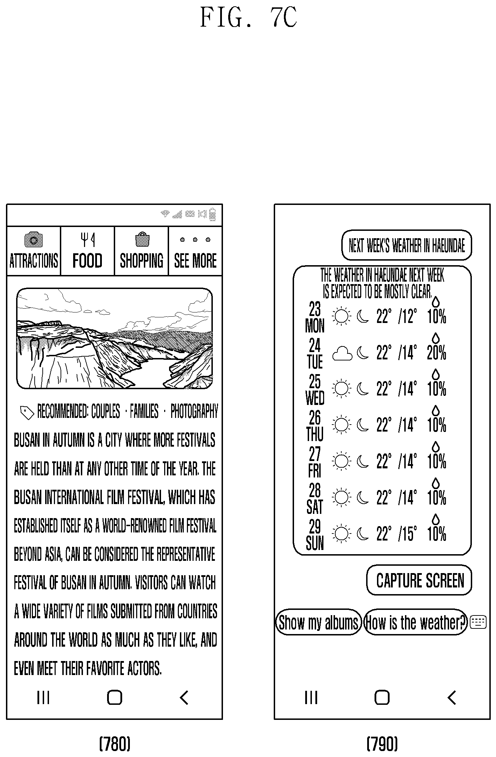

FIG. 7C is a diagram illustrating an example of capturing the execution screen of a voice assistant application and the execution screen of a first application in an electronic device according to an embodiment.

Referring to FIG. 7C, if there is a correlation between the execution screen of the voice assistant application and the execution screen of the travel application, the processor 120 may store the execution screen of the voice assistant application and the execution screen of the travel application in the memory 130. A seventh user interface 780 may include the execution screen of the travel application. An eighth user interface 790 may include the execution screen of the voice assistant application.

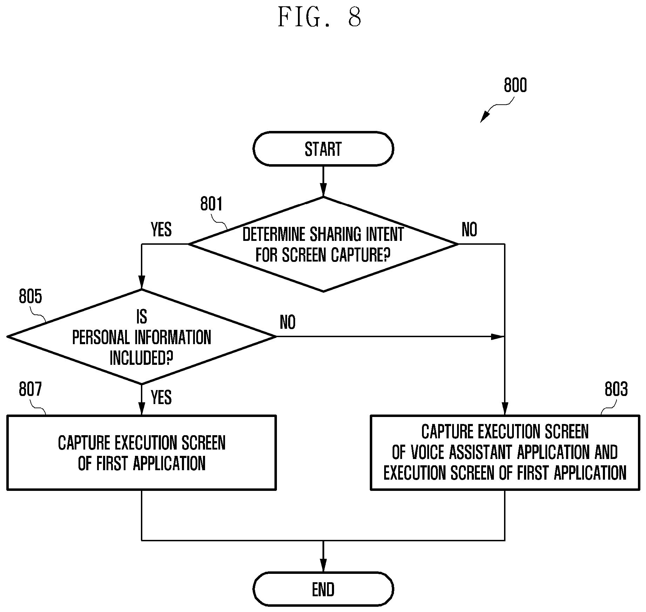

FIG. 8 is a flowchart 800 illustrating a method for capturing a screen, based on a sharing intent for screen capture, in an electronic device according to an embodiment. FIG. 8 shows a method for capturing a screen, which may be performed alone, or may be performed when "Yes" is determined in operation 403 in FIG. 4 or "Yes" is determined in operation 603 in FIG. 6.

Referring to FIG. 8, in operation 801, a processor (e.g., the processor 120 in FIG. 1) of an electronic device (e.g., the electronic device 101 in FIG. 1) according to an embodiment may determine a sharing intent for screen capture. When a screen capture request is received from a user through the voice assistant application, the processor 120 may determine a sharing intent for the screen capture. The user may simply utter "Capture the screen," or may utter "Capture the screen and send it to Mark," to share the captured screen with the other party (e.g., someone other than the user).

The processor 120 may perform operation 805 when there is a sharing intent for the screen capture, and perform operation 803 when there is no sharing intent for the screen capture.

When there is no sharing intent for the screen capture, the processor 120 may capture the execution screen of the voice assistant application and the execution screen of the first application in operation 803. If a screen capture request is received while displaying the execution screen of the voice assistant application, if the first content included in the voice assistant application corresponds to the second content included in the first application, and if there is no sharing intent for the screen capture, the processor 120 may capture the execution screen of the voice assistant application and the execution screen of the first application. The processor 120 may store the captured images in the memory (e.g., the memory 130 in FIG. 1). The captured images may be the execution screens of the voice assistant application and the first application.

If there is a sharing intent for the screen capture, the processor 120 may determine whether the voice assistant application includes personal information in operation 805. The personal information may include private information related to the user, such as the user's weight, height, date of birth, address, face, or contact information. The processor 120 may perform operation 807 when the voice assistant application includes personal information, and perform operation 803 when the first content included in the voice assistant application does not include personal information.

If the voice assistant application includes personal information, the processor 120 may capture the execution screen of the first application in operation 807. If the voice assistant application includes personal information, the processor 120 may capture only the execution screen of the first application, instead of capturing the execution screen of the voice assistant application, to protect personal information. According to an embodiment, the processor 120 may capture the execution screen of the voice assistant application with only the personal information portion hidden and share the captured execution screen of the voice assistant application. For example, the processor 120 may process the personal information portion by masking it with another layer or replacing it with a random number. The processor 120 may share the captured image with the other party (e.g., transmit it to the other party's electronic device). The captured image may be the execution screen of the first application. The processor 120 may store the captured image in the memory 130.

If there is a sharing intent for the screen capture, and the voice assistant application does not include personal information, the processor 120 may capture the execution screen of the voice assistant application and the execution screen of the first application in operation 803. If screen capture is requested while displaying the execution screen of the voice assistant application, if the first content included in the voice assistant application corresponds to the second content included in the first application, if there is a sharing intent for the screen capture, and if the voice assistant application does not include personal information, the processor 120 may capture the execution screen of the voice assistant application and the execution screen of the first application. The processor 120 may share the captured images with the other party (e.g., transmit it to the other party's electronic device). The captured images may be the execution screens of the voice assistant application and the first application. The processor 120 may store the captured images in the memory 130.

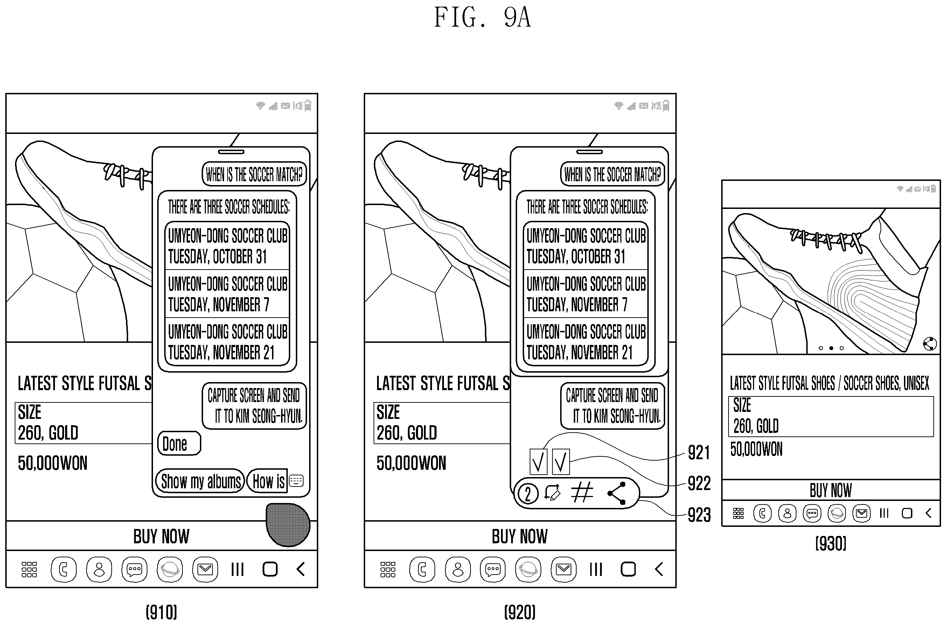

FIG. 9A is a diagram illustrating an example of capturing a screen, based on a sharing intent for screen capture, in an electronic device according to an embodiment.

Referring to FIG. 9A, a processor (e.g., the processor 120 in FIG. 1) of an electronic device (e.g., the electronic device 101 in FIG. 1) according to an embodiment may display, on a display (e.g., the display module 160 in FIG. 1), a first user interface 910 including an execution screen of the voice assistant application on an execution screen of a first application (e.g., a shopping application). While displaying the execution screen of the shopping application, the processor 120 may receive a first user query and a second user query from the user via the voice assistant application. The user may be curious about the soccer match schedule while looking at sneakers, and may ask the voice assistant application "What is the soccer match schedule?". The user input "inquiring about the soccer match schedule" may correspond to the first user query. A first user interface 910 may include text corresponding to the first user query, text (or an image) corresponding to first result data corresponding to the first user query, and the second user query. The second user query may be a request to capture a screen and share the captured screen with other users.

The processor 120 may determine whether the screen capture includes a sharing intent and, if the screen capture includes a sharing intent, determine whether the execution screen of the voice assistant application includes personal information. If the execution screen of the voice assistant application does not include personal information, the processor 120 may capture the execution screen of the voice assistant application and the execution screen of the shopping application. A second user interface 920 may include a preview image of the captured screen in a thumbnail format on the execution screen of the voice assistant application. A first thumbnail image 921 included in the second user interface 920 may be the execution screen of the voice assistant application, and a second thumbnail image 922 may be the execution screen of the shopping application. Furthermore, when a current screen capture is requested, a menu item 923 may be displayed, as shown in the second user interface 920. The menu item 923 may include a menu for editing the captured image or a scroll capture menu. The menu item 923 may be displayed upon receiving a screen capture command and disappear after a predetermined period of time (e.g., by removing the display). The processor 120 may share the captured images with the other party (e.g., transmit it to the other party's electronic device). The captured images may be the execution screens of the voice assistant application and the first application.

If the execution screen of the voice assistant application includes personal information, the processor 120 may capture the execution screen of the shopping application. A third user interface 930 may include the execution screen of the shopping application. The processor 120 may share the captured image with the other party (e.g., transmit it to the other party's electronic device). The captured image may be the execution screen of the first application.

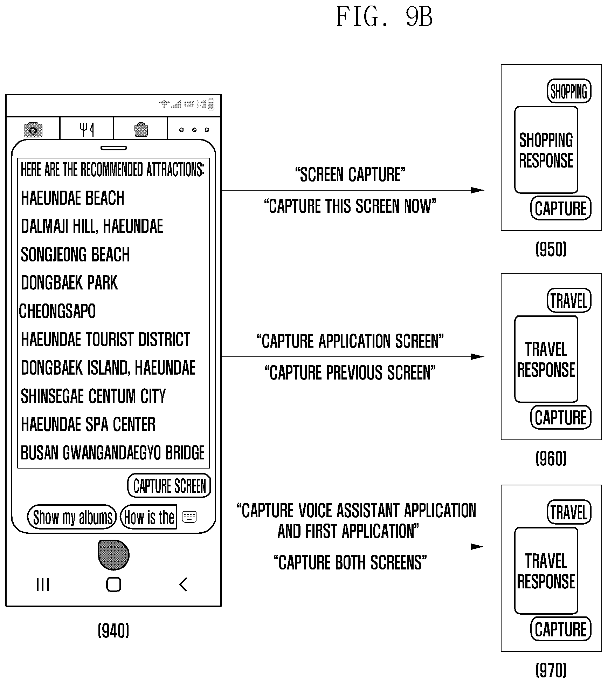

FIG. 9B is a diagram illustrating an example of capturing a screen by specifying a screen to be captured in an electronic device according to an embodiment.

Referring to FIG. 9B, the processor 120 may receive, from a user, a designation of whether to capture the execution screen of the voice assistant application or the execution screen of the first application. The processor 120 may capture only the execution screen of an application selected (e.g., touched) by the user, or only the execution screen of the currently focused application. The processor 120 may determine the screen to be captured by determining the user intent requesting capture through the voice assistant application. The processor 120 may interpret and determine inferable language, such as referential pronouns or relative pronouns, through user input (e.g., voice utterances or typing commands) via the voice assistant application, thereby determining the screen to be captured.

If a request to capture the execution screen of the voice assistant application (e.g., "Capture this screen now") is received from the user, the processor 120 may capture the execution screen of the voice assistant application. A fifth user interface 950 may include the execution screen of the voice assistant application.

Alternatively, if a request to capture the execution screen of the first application (e.g., app screen capture, previous screen capture, or capture after uttering the app name) is received from the user, the processor 120 may capture the execution screen of the first application. A sixth user interface 960 may include the execution screen of the first application.

Alternatively, if a request to capture the execution screens of the voice assistant application and the first application (e.g., "Capture both the voice assistant app and the first app screen," or "Capturing both screens") is received from the user, the processor 120 may capture the execution screen of the voice assistant application and the execution screen of the first application. A seventh user interface 970 may include the execution screen of the voice assistant application and the execution screen of the first application.

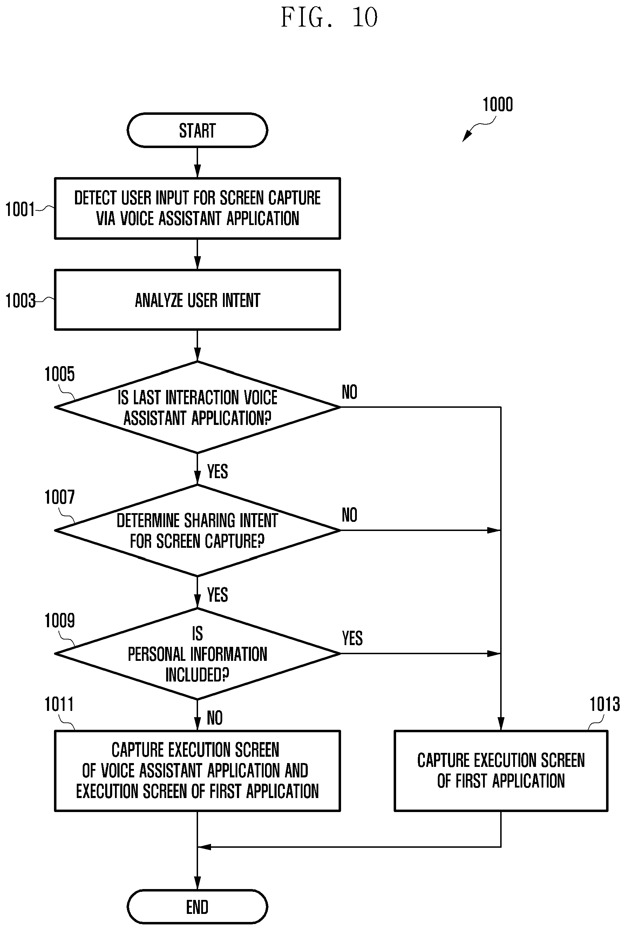

FIG. 10 is a flowchart 1000 illustrating a method for capturing a screen by identifying the intent of a user who requested screen capture in an electronic device according to an embodiment.

Referring to FIG. 10, in operation 1001, a processor (e.g., the processor 120 in FIG. 1) of an electronic device (e.g., the electronic device 101 in FIG. 1) according to an embodiment may detect a user input for screen capture via the voice assistant application. The processor 120 may receive a screen capture request from the user via the voice assistant application while displaying the execution screen of a first application. The user input may be requested via the voice assistant application and may include, for example, a user utterance such as "Screen capture."

The voice assistant application may collect and provide customized information to the user, based on an artificial intelligence (AI) engine and voice recognition, and perform various tasks, such as schedule management, email transmission, and restaurant reservations, according to the user's voice commands. For example, the user may utter a predetermined voice wake word or press a button associated with the voice assistant application. The processor 120 may detect the voice wake word obtained through a microphone (e.g., the input module 150 in FIG. 1) and execute the voice assistant application. The processor 120 may display text corresponding to the user input for screen capture on the execution screen of the voice assistant application.

Although the drawing illustrates that operations 1003, 1005, 1007, and 1009 are performed in that order, the order of the operations may vary. For example, operation 1005 may be performed first, followed by operations 1003, 1007, and 1009 in sequence. Alternatively, some operations may not be performed.

In operation 1003, the processor 120 may analyze a user intent. The processor 120 may analyze whether the user intent included in the detected user input is to capture an image of the execution screen of the first application, capture an image of the execution screen of the voice assistant application, or capture images of both the execution screen of the first application and the execution screen of the voice assistant application. The user intent may explicitly specify a correlation between content included in two execution screens or a screen to be captured. The user intent specifying the screen to be captured may include touching (or currently focusing) the screen to be captured, or uttering (e.g., "Capture the current screen," or "Capture the voice assistant screen").

According to an embodiment, as one example of analyzing the user intent, the processor 120 may determine whether the first content (or first text) included in the first application corresponds to the second content (or second text) included in the voice assistant application. Whether the first content corresponds to the second content may include whether the first content matches the second content by at least a specified range. For example, the first content and the second content may each include at least one of text, an image, or a video. For example, when the first content and the second content are "text," the processor 120 may determine how closely the text of the first content matches the text of the second content.

In operation 1005, the processor 120 may determine whether the last interaction was detected in the voice assistant application. The processor 120 may determine whether the last user interaction immediately prior to the user input for the screen capture was detected in the voice assistant application or in the execution screen of the first application. The last user interaction may refer to a user input immediately prior to requesting the screen capture via the voice assistant application. The user input may include an input by touching a display (e.g., the display module 160 in FIG. 1), an input by pressing a physical button, or a voice command (e.g., a user query).

The user may request a screen capture while displaying the execution screen of the first application, or may request a screen capture while displaying the execution screen of the voice assistant application. For example, if a screen capture is requested while the execution screen of the first application is displayed, the last user interaction may be detected on the execution screen of the first application. Alternatively, if a screen capture is requested while the execution screen of the voice assistant application is displayed, the last user interaction may be detected on the execution screen of the voice assistant application. The processor 120 may perform operation 1007 when the identified last interaction is detected in the voice assistant application, and perform operation 1013 when the identified last interaction is not detected in the voice assistant application.

If the identified last interaction is detected in the voice assistant application, the processor 120 may determine a sharing intent for the screen capture in operation 1007. When a screen capture request is received from the user via the voice assistant application, the processor 120 may determine a sharing intent of the screen capture. The user may simply utter "Capture the screen," or may utter "Capture the screen and send it to OO," to share the captured screen with the other party (e.g., someone other than the user).

The processor 120 may perform operation 1009 when there is a sharing intent for the screen capture, and perform operation 1013 when there is no sharing intent for the screen capture.

When there is a sharing intent for the screen capture, the processor 120 may determine whether the voice assistant application includes personal information in operation 1009. The personal information may include private information related to the user, such as the user's weight, height, date of birth, address, face, or contact information. The processor 120 may perform operation 1013 when the voice assistant application includes personal information, and perform operation 1011 when the voice assistant application does not include personal information.

If the voice assistant application does not include personal information, the processor 120 may capture the execution screen of the voice assistant application and the execution screen of the first application in operation 1011. If the last user interaction is detected in the voice assistant application, if the first content corresponds to the second content, and if there is no sharing intent for the screen capture (e.g., "No" in operation 1007), the processor 120 may capture the execution screen of the voice assistant application and the execution screen of the first application.

If the last user interaction is detected in the voice assistant application, if the first content corresponds to the second content, if there is a sharing intent for the screen capture, and if the voice assistant application does not include personal information (e.g., "No" in operation 1009), the processor 120 may capture the execution screen of the voice assistant application and the execution screen of the first application. The processor 120 may share the captured images with the other party (e.g., transmit it to the other party's electronic device). The captured images may be the execution screen of the voice assistant application and the execution screen of the first application. The processor 120 may store the captured images in the memory (e.g., the memory 130 in FIG. 1).

In operation 1013, the processor 120 may capture the execution screen of the first application. For example, if the last user interaction is detected in the first application (e.g., "No" in operation 1005), the processor 120 may capture the execution screen of the first application. If the last user interaction is detected in the voice assistant application and if the first content does not correspond to the second content (e.g., "No" in operation 1005), the processor 120 may capture the execution screen of the first application. If the last user interaction is detected in the voice assistant application, if the first content corresponds to the second content, and if there is no sharing intent for the screen capture (e.g., "No" in operation 1007), the processor 120 may capture the execution screen of the first application. If the last user interaction is detected in the voice assistant application, if the first content corresponds to the second content, if there is a sharing intent for the screen capture, and if the voice assistant application includes personal information (e.g., "Yes" in operation 1009), the processor 120 may capture the execution screen of the first application.

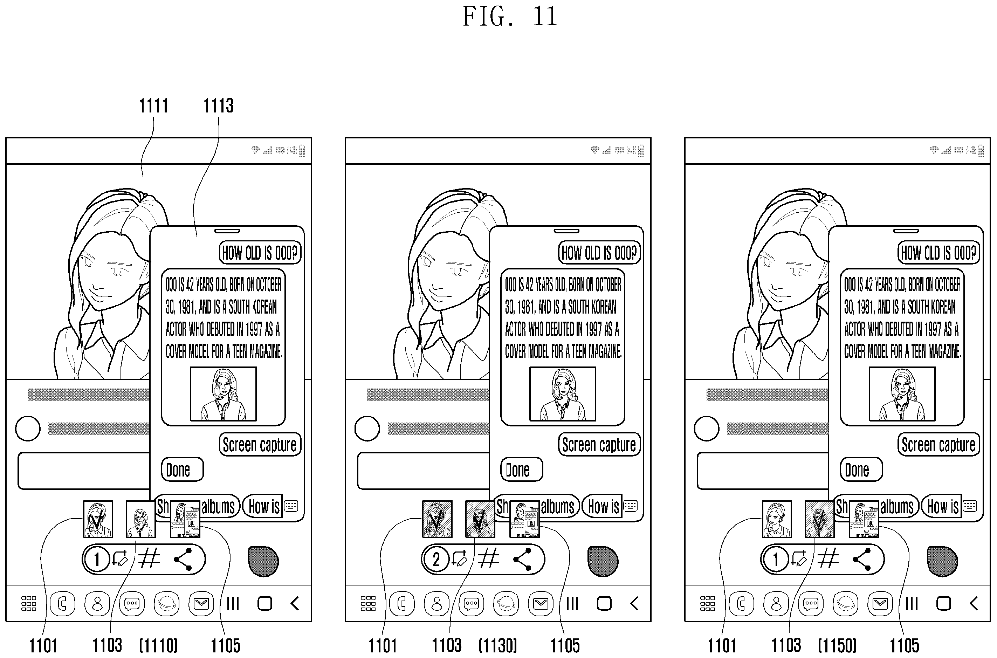

FIG. 11 is a diagram illustrating an example of selectively storing a captured screen in an electronic device according to an embodiment.

Referring to FIG. 11, a processor (e.g., the processor 120 in FIG. 1) of an electronic device (e.g., the electronic device 101 in FIG. 1) according to an embodiment may display a first user interface 1110 on a display (e.g., the display module 160 in FIG. 1) in response to a screen capture request via the voice assistant application. The first user interface 1110 may include an execution screen of the voice assistant application 1113 on an execution screen 1111 of a first application. Additionally, the first user interface 1110 may include a preview image of the captured screen in a thumbnail format. A first thumbnail image 1101 included in the first user interface 1110 may be the execution screen of the voice assistant application, a second thumbnail image 1103 may be the execution screen of the first application, and a third thumbnail image 1105 may be the entire screen of the display module (e.g., the screen where the execution screen of the voice assistant application is displayed on the execution screen of the first application). In addition, the first user interface 1110 may further include a menu item for editing the captured images.

The user may select at least one of the images (e.g., captured images or images for capturing) and store or edit it. The second user interface 1130 may show that the first thumbnail image 1101 and the second thumbnail image 1103 are selected from among the first thumbnail image 1101, the second thumbnail image 1103, and the third thumbnail image 1105. The user may change the selected thumbnail (e.g., select (checkbox checked) → deselect (checkbox unchecked), or deselect → select). The selected images may be displayed separately from the unselected images. For example, the selected images, the first thumbnail image 1101 and the second thumbnail image 1103, may be marked with a check mark to indicate that they are selected. The third user interface 1150 may show that the second thumbnail image 1103 has been selected from among the first thumbnail image 1101, the second thumbnail image 1103, and the third thumbnail image 1105. The processor 120 may store the selected thumbnail images in the memory (e.g., memory 130 in FIG. 1) or edit them at the user's request.

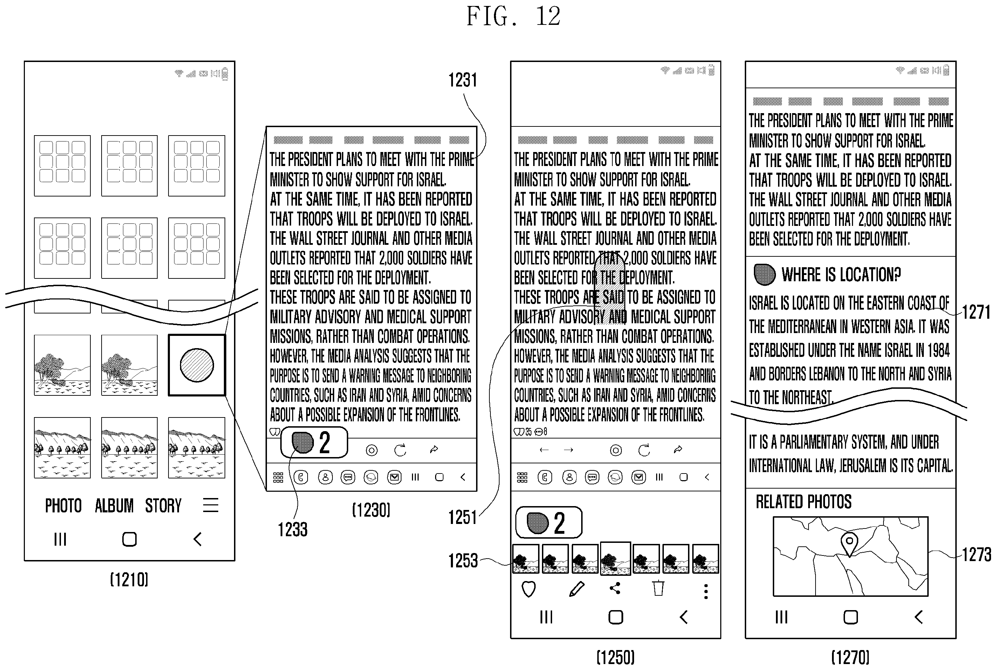

FIG. 12 is a diagram illustrating an example of providing a captured screen image through a voice assistant application in an electronic device according to an embodiment.

Referring to FIG. 12, a processor (e.g., the processor 120 in FIG. 1) of an electronic device (e.g., the electronic device 101 in FIG. 1) according to an embodiment may display a first user interface 1210 including an execution screen of a gallery application on a display (e.g., the display module 160 in FIG. 1). The gallery application may provide images or videos stored in the memory (e.g., the memory 130 in FIG. 1) of the electronic device 101. The processor 120 may group (e.g., bundle) images captured (or stored) through the voice assistant application and provide them to the gallery application. When a user selection for one of the images stored through the voice assistant application is received in the first user interface 1210, the processor 120 may display a second user interface 1230 on the display module 160.

The second user interface 1230 may include a selected image 1231 and an indicator 1233 related to the selected image 1231. The indicator 1233 may indicate the number (e.g., 2) of stored (or captured) images along with the images 1231 selected through the voice assistant application. When the user requests a detailed view in the second user interface 1230, the processor 120 may display a third user interface 1250 on the display module 160. The user's detailed view request may be a scroll input 1251 of touching and dragging the image displayed on the display module 160. The third user interface 1250 may include an image list 1253 related to the selected image 1231.

When the user continues to scroll upward in the third user interface 1250, the processor 120 may display a fourth user interface 1270 on the display module 160. The fourth user interface 1270 may include detailed information (or content) corresponding to the selected image 1231, and the detailed information may include text 1271 and a related image 1273. According to an embodiment, when storing an image obtained by capturing the execution screen of the voice assistant application, the processor 120 may store detailed information of the execution screen of the voice assistant application in association with the captured image. That is, the memory 130 may store a captured image (e.g., the execution screen of the voice assistant application) and detailed information associated with the captured image. The detailed information may include at least one of text, an image, or a video.

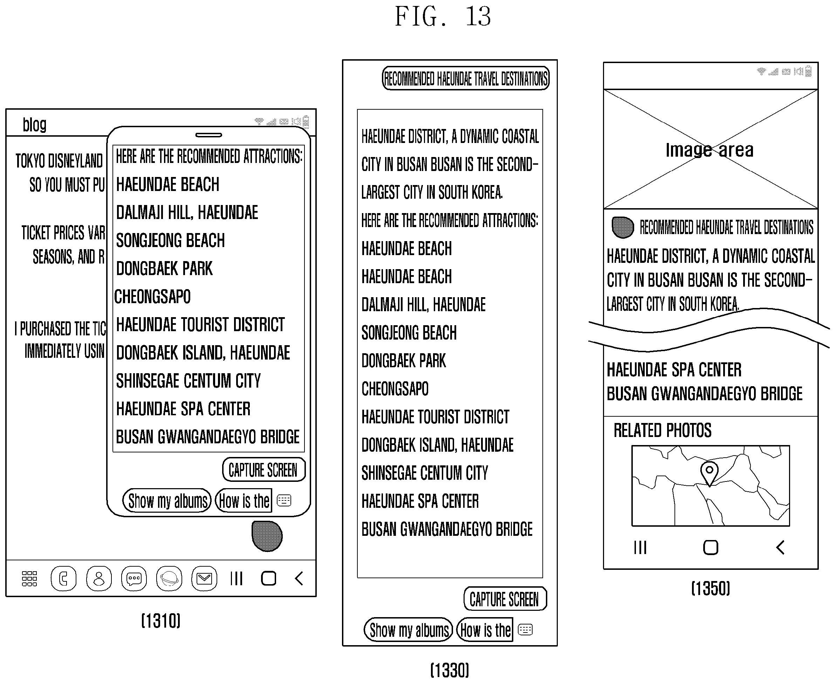

FIG. 13 is a diagram illustrating an example of capturing content that exceeds the screen size in an electronic device according to an embodiment.

Referring to FIG. 13, a processor (e.g., the processor 120 in FIG. 1) of an electronic device (e.g., the electronic device 101 in FIG. 1) according to an embodiment may display a first user interface 1310 on a display (e.g., the display module 160 in FIG. 1). The first user interface 1310 illustrates an example of a screen capture request via the voice assistant application. The processor 120 may capture the execution screen of the voice assistant application in response to the screen capture request via the voice assistant application. At this time, if the content included in the execution screen of the voice assistant application extends beyond the display module 160, the processor 120 may capture not only the content displayed on the display module 160, but also content not displayed on the display module 160.

The second user interface 1330 is depicted as being larger in up and down directions than the first user interface 1310. The size of the display module 160 may correspond to the size of the first user interface 1310, and the second user interface 1330 may be illustrated to indicate that a portion of the content requested for screen capture extends beyond the display module 160 to facilitate understanding of the disclosure.

The processor 120 may store the execution screen of the voice assistant application displayed on the display module 160, and may also capture the entire content included in the voice assistant application in which the screen capture is requested and store it in the memory (e.g., the memory 130 in FIG. 1). The captured content may be the same as the third user interface 1350. The third user interface 1350 may include at least one of text, an image, or a video as the captured content. The captured content may be stored as detailed information of the captured image, and detailed information not displayed on the display module 160 may be further displayed on the captured image according to a user's scroll input.

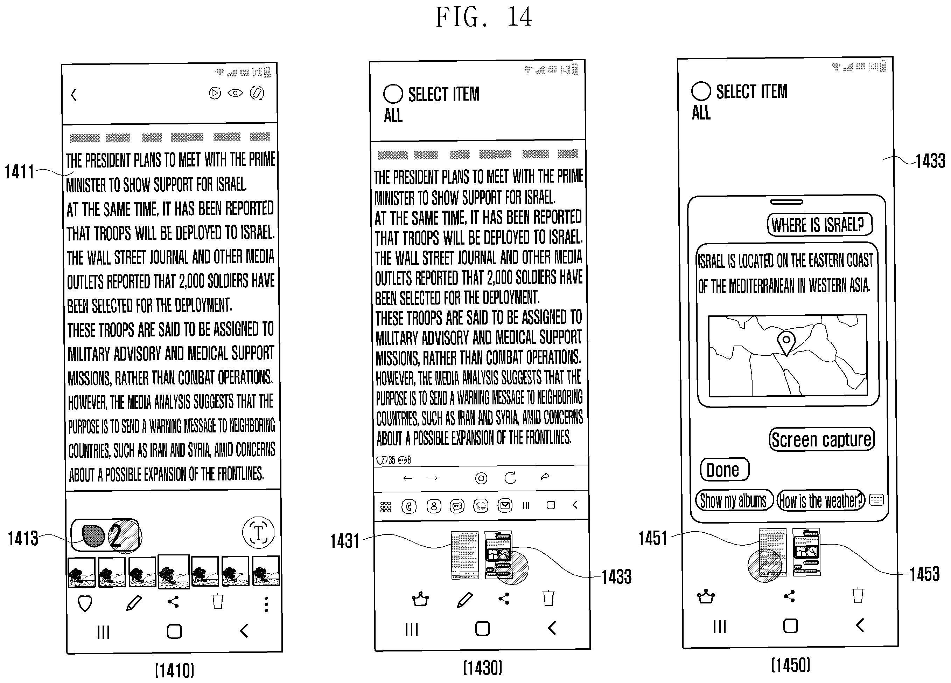

FIG. 14 is a diagram illustrating an example of providing an image captured through a voice assistant application in an electronic device according to an embodiment.

Referring to FIG. 14, a processor (e.g., the processor 120 in FIG. 1) of an electronic device (e.g., the electronic device 101 in FIG. 1) according to an embodiment may display a first user interface 1410 on a display (e.g., the display module 160 in FIG. 1). The first user interface 1410 is an execution screen of a gallery application, and may include an image 1411 captured (or stored) through the voice assistant application and an indicator 1413 related to the image 1411. In the case where the execution screen of the gallery application includes a plurality of stored images, for example, a background image (e.g., the first execution screen of the first application), an assistant image (e.g., the second execution screen of the voice assistant application), or an entire integrated image (e.g., the entire screen where the second execution screen is overlaid on the first execution screen), the images may be grouped and stored. Although the drawing illustrates two images as grouped, an image in which the second execution screen is overlaid on the first execution screen may also be added. The indicator 1413 may indicate the number (e.g., 2) of grouped images along with the image 1411 captured through the voice assistant application. The processor 120 may group the images captured through the voice assistant application and represent the number of grouped images by the indicator 1413.

When a user input for selecting the indicator 1413 is detected in the first user interface 1410, the processor 120 may display a second user interface 1430 on the display module 160. The second user interface 1430 may display the grouped images 1431 and 1433 in a thumbnail format, along with the image 1411 captured through the voice assistant application. The grouped images may include images (e.g., the image of the second execution screen, or the image in which the second execution screen is overlaid on the first execution screen) that are stored (or captured) together with the image 1411. For example, the second user interface 1430 may display the grouped images, a first thumbnail image 1431 or a second thumbnail image 1433, in a thumbnail format.

When the second thumbnail image 1433 is selected from the second user interface 1430, the processor 120 may display a third user interface 1450 on the display module 160. The third user interface 1450 may display the second thumbnail image 1433 and images 1451 and 1453 that are grouped with the second thumbnail image 1433 in a thumbnail format. For example, the third user interface 1450 may include a third thumbnail image 1451 or a fourth thumbnail image 1453, which are images grouped with the second thumbnail image 1433, in a thumbnail format.

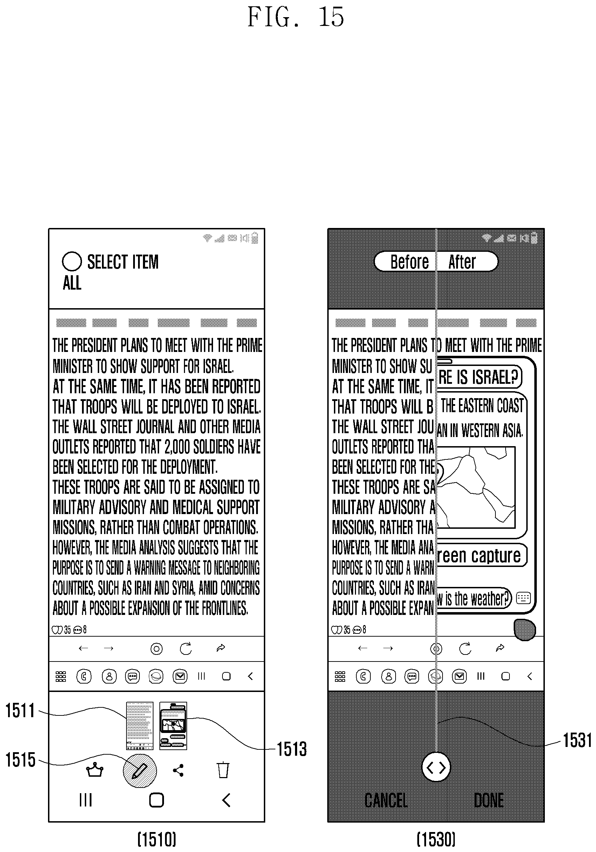

FIG. 15 is a diagram illustrating an example of editing an image captured through a voice assistant application in an electronic device according to an embodiment.

Referring to FIG. 15, a processor (e.g., the processor 120 in FIG. 1) of an electronic device (e.g., the electronic device 101 in FIG. 1) according to an embodiment may display a first user interface 1510 on a display (e.g., the display module 160 in FIG. 1). The first user interface 1510 may include an image captured through the voice assistant application, and images grouped with the captured image. The grouped images may be displayed in a thumbnail format and may include, for example, a first thumbnail image 1511 and a second thumbnail image 1513.

When an edit menu 1515 is selected in the first user interface 1510, the processor 120 may display a second user interface 1530 on the display module 160. The second user interface 1530 illustrates an example of editing grouped images using an editing tool 1531. The second user interface 1530 may display a portion of a first thumbnail image 1511 and a portion of a second thumbnail image 1513 based on the editing tool 1531. The user may edit the first thumbnail image 1511 or the second thumbnail image 1513 by moving the editing tool 1531. For example, if the first thumbnail image 1511 includes the execution screen of the voice assistant application on the execution screen of a first application (e.g., an image obtained by capturing the entire screen of the display module 160), the user may edit the image to include only the execution screen of the first application or only the execution screen of the voice assistant application.

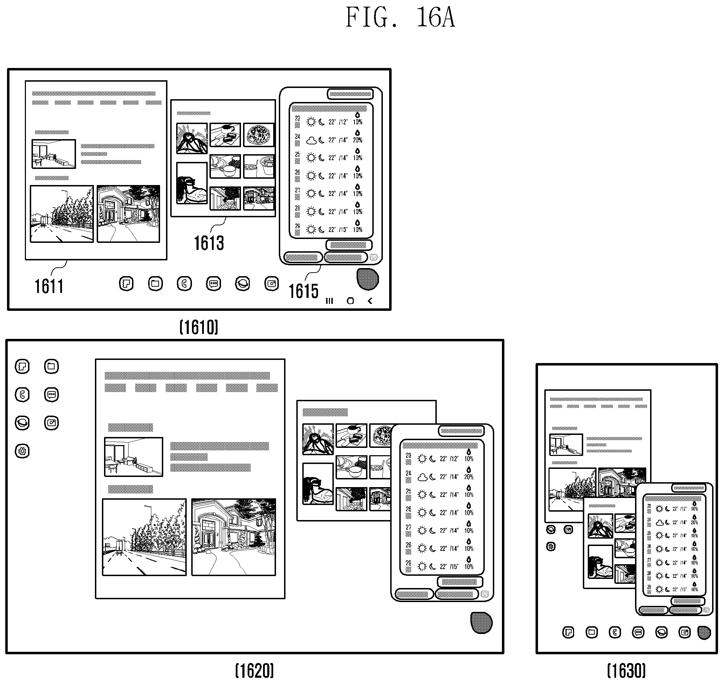

FIG. 16A is a diagram illustrating an example of capturing a screen through a voice assistant application in electronic devices having various sizes according to an embodiment.

Referring to FIG. 16A, an electronic device (e.g., the electronic device 101 in FIG. 1) according to an embodiment may have various screen sizes (or display sizes). If the electronic device 101 is a tablet PC, execution screens of a plurality of applications may be displayed in multiple windows, as shown in a first user interface 1610. The first user interface 1610 may include execution screens 1611 of first applications, execution screens 1613 of second applications, and execution screens 1615 of third applications. Alternatively, if the electronic device 101 is a computer, execution screens of a plurality of applications may be displayed in multiple windows, as shown in a second user interface 1620. Alternatively, if the electronic device 101 is a foldable electronic device (or flexible electronic device), execution screens of a plurality of applications may be displayed in multiple windows, as shown in the third user interface 1630. Depending on the type of electronic device 101, the screen sizes of the first user interface 1610, the second user interface 1620, and the third user interface 1630 may vary. Even if the screen sizes are different from each other, the electronic device 101 may implement (or apply) the disclosure described with reference to FIGS. 2 to 15.

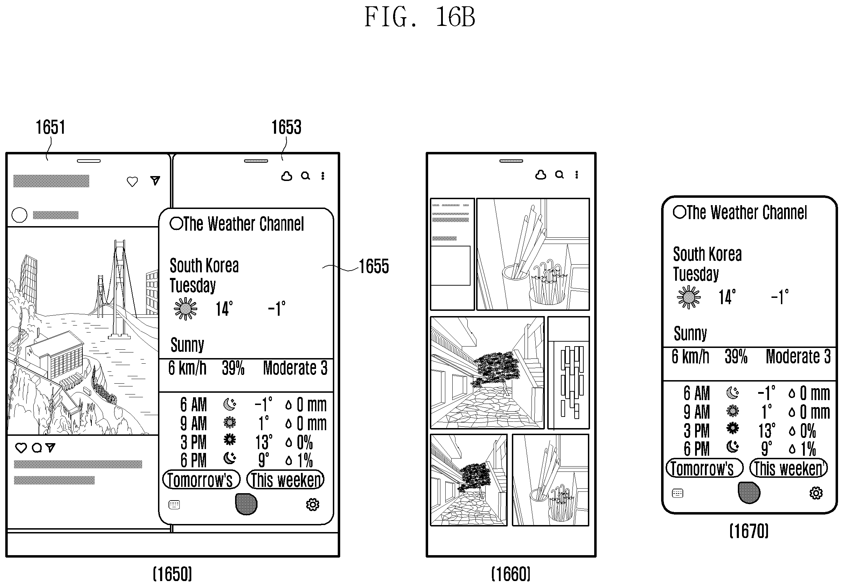

FIG. 16B is a diagram illustrating an example of capturing a screen through a voice assistant application in an electronic device having various sizes according to an embodiment.

Referring to FIG. 16B, if the electronic device 101 is a foldable electronic device, execution screens of a plurality of applications may be displayed on a display (e.g., the display module 160 in FIG. 1) via multiple windows. A fourth user interface 1650 may include execution screens 1651 of first applications, execution screens 1653 of second applications, and an execution screen 1655 of a third application. The fourth user interface 1650 may represent an example in which the last user interaction is detected on the execution screens 1653 of the second applications, and the third application execution screen 1655 is the execution screen of the voice assistant application.

When a screen capture request is received via the voice assistant application while displaying the fourth user interface 1650, a processor (e.g., the processor 120 in FIG. 1) of the electronic device 101 may capture the execution screens of the second applications and the execution screen of the third application. A fifth user interface 1660 may display the execution screens of the second applications, and a sixth user interface 1670 may display the execution screens of the third applications. The processor 120 may capture an image corresponding to the fifth user interface 1660 and an image corresponding to the sixth user interface 1670 in response to a screen capture through the voice assistant application, and store the captured images in the memory (e.g., memory 130 in FIG. 1).

An operation method of an electronic device 101 according to an embodiment of the disclosure may include displaying, on a display 160 of the electronic device, a first execution screen of a first application, displaying, on the display, a second execution screen of a voice assistant application to be overlaid on a partial area of the first execution screen of the first application, receiving a screen capture command through the voice assistant application while the second execution screen is displayed to be overlaid on the partial area of the first execution screen, and performing, based on the screen capture command, screen capture, while the second execution screen is displayed to be overlaid on the partial area of the first execution screen, by storing an image of the first execution screen in which an image of the second execution screen is not overlaid on the partial area of the first execution screen.

The second execution screen may be displayed as a foreground image on a first layer, and the first execution screen may be displayed as a background image on a second layer. The method may further include analyzing a user intent, based on the screen capture command. The performing may include performing, based on the analyzed user intent, screen capture, while the second execution screen is displayed to be overlaid on the partial area of the first execution screen, by storing at least one of (1) an image of the first execution screen in which the image of the second execution screen is not overlaid on the partial area of the first execution screen, (2) an image of the second execution screen, or (3) an image in which the image of the second execution screen is overlaid on the partial area of the first execution screen.

The method may include determining whether first text included in the first execution screen is related to second text included in the second execution screen, performing screen capture by storing the image of the first execution screen and the image of the second execution screen when the first text is related to the second text, and performing screen capture by storing the image of the first execution screen, instead of storing the image of the second execution screen, when the first text is not related to the second text.

The method may further include determining whether the last user interaction prior to receiving the screen capture command is the first execution screen or the second execution screen, performing, based on the screen capture command, screen capture by storing the image of the first execution screen in which the image of the second execution screen is not overlaid on the partial area of the first execution screen when the last user interaction is the first execution screen, and performing screen capture by storing the image of the first execution screen on which the image of the second execution screen is not overlaid and the image of the second execution screen when the last user interaction is the second execution screen.

The various embodiments of the disclosure disclosed in this specification and drawings are merely specific examples to easily explain the technical concept of the disclosure and to aid in understanding the disclosure, and are not intended to limit the scope of the disclosure. Therefore, the scope of the disclosure should be interpreted to encompass all changes or modifications derived from the technical concept of the disclosure, in addition to the embodiments disclosed herein.

## Claims

1. An electronic device (101) comprising:
a display (160);
a processor (120); and
a memory (130), wherein instructions stored in the memory are configured to cause, when executed by the processor, the electronic device to
display, on the display, a first execution screen of a first application,
display, on the display, a second execution screen of a voice assistant application to be overlaid on a partial area of the first execution screen of the first application,
receive a screen capture command through the voice assistant application while the second execution screen is displayed to be overlaid on the partial area of the first execution screen, and
perform, based on the screen capture command, screen capture, while the second execution screen is displayed to be overlaid on the partial area of the first execution screen, by storing an image of the first execution screen in which an image of the second execution screen is not overlaid on the partial area of the first execution screen.

2. The electronic device of claim 1,
wherein the second execution screen is displayed as a foreground image on a first layer, and the first execution screen is displayed as a background image on a second layer.

3. The electronic device of claim 1, wherein the instructions are configured to cause, when executed by the processor, the electronic device to:
analyze a user intent, based on the screen capture command; and
perform, based on the analyzed user intent, screen capture, while the second execution screen is displayed to be overlaid on the partial area of the first execution screen, by storing at least one of (1) an image of the first execution screen in which the image of the second execution screen is not overlaid on the partial area of the first execution screen, (2) an image of the second execution screen, or (3) an image in which the image of the second execution screen is overlaid on the partial area of the first execution screen.

4. The electronic device of claim 1, wherein the instructions are configured to cause, when executed by the processor, the electronic device to
perform, based on the screen capture command, screen capture, while the second execution screen is displayed to be overlaid on the partial area of the first execution screen, by storing the image of the first execution screen and the image of the second execution screen overlaid on the partial area of the first execution screen.

5. The electronic device of claim 1, wherein the instructions are configured to cause, when executed by the processor, the electronic device to:
determine whether first text included in the first execution screen is related to second text included in the second execution screen;
perform screen capture by storing the image of the first execution screen and the image of the second execution screen in a case where the first text is related to the second text; and
perform screen capture by storing the image of the first execution screen, instead of storing the image of the second execution screen, in a case where the first text is not related to the second text.

6. The electronic device of claim 1, wherein the instructions are configured to cause, when executed by the processor, the electronic device to
perform screen capture, based on the screen capture command, by storing the image of the first execution screen on which the image of the second execution screen is not overlaid and the image of the second execution screen in a case where the second execution screen is equal to or greater than a specified size of the display.

7. The electronic device of claim 1, wherein the instructions are configured to cause, when executed by the processor, the electronic device to:
determine whether a last user interaction prior to receiving the screen capture command is the first execution screen or the second execution screen;
perform, based on the screen capture command, screen capture by storing the image of the first execution screen in which the image of the second execution screen is not overlaid on the partial area of the first execution screen in a case where the last user interaction is the first execution screen; and
perform screen capture by storing the image of the first execution screen on which the image of the second execution screen is not overlaid and the image of the second execution screen in a case where the last user interaction is the second execution screen.

8. The electronic device of claim 1, wherein the instructions are configured to cause, when executed by the processor, the electronic device to:
determine whether the screen capture command comprises an intent for sharing the screen capture;
perform screen capture by storing the image of the first execution screen and the image of the second execution screen in a case where the screen capture command does not comprise a sharing intent;
determine whether second text included in the second execution screen comprises personal information in a case where the screen capture command comprises a sharing intent; and
perform screen capture by storing the image of the first execution screen in a case where the second text comprises personal information.

9. The electronic device of claim 1, wherein the instructions are configured to cause, when executed by the processor, the electronic device to:
display preview images of captured screens in a thumbnail format after the screen capture;
store a captured image selected by a user from the preview images;
detect a user input for editing after selecting the captured image; and
provide a user interface for editing the selected captured image in response to the user input for editing.

10. The electronic device of claim 1, wherein the instructions are configured to cause, when executed by the processor, the electronic device to
store the captured image of the second execution screen while associating content included in the second execution screen with the image of the second execution screen.

11. The electronic device of claim 1, wherein the instructions are configured to cause, when executed by the processor, the electronic device to
store, when performing a screen capture on the image of the second execution screen, in a case where a portion of content included in the second execution screen extends beyond a display area of the display, the entire content included in an area displayed on the display and an area not displayed on the display.

12. The electronic device of claim 1, wherein the instructions are configured to cause, when executed by the processor, the electronic device to:
group and display images obtained by capturing the execution screen of the voice assistant application on an execution screen of an image storage application;
display an indicator indicating that there are other images captured along with the execution screen of the voice assistant application; and
display, when the indicator is selected, a representative captured image from among the grouped images and display the other grouped images in a thumbnail format.

13. The electronic device of claim 1, wherein the instructions are configured to cause, when executed by the processor, the electronic device to
provide an editing interface for separating the image of the first execution screen from the image of the second execution screen in a case where the captured image is the image of the second execution screen overlaid on the partial area of the first execution screen.

14. The electronic device of claim 1, wherein the instructions are configured to cause, when executed by the processor, the electronic device to:
receive a screen capture command through the voice assistant application while execution screens of a plurality of applications are displayed through multiple windows;
perform screen capture by storing an image of the execution screen of the application in a currently focused window, or
determine whether third text included in the execution screen of the application in the currently focused window is related to second text included in the execution screen of the voice assistant application;
perform screen capture by storing the image of the second execution screen and the image of the execution screen of the application in the currently focused window in a case where the third text is related to the second text; and
perform screen capture by storing the image of the execution screen of the application in the currently focused window, instead of storing the image of the second execution screen, in a case where the third text is not related to the second text.

15. An operation method of an electronic device (101), the method comprising:
displaying, on a display of the electronic device, a first execution screen of a first application;
displaying, on the display, a second execution screen of a voice assistant application to be overlaid on a partial area of the first execution screen of the first application;
receiving a screen capture command through the voice assistant application while the second execution screen is displayed to be overlaid on the partial area of the first execution screen; and
performing, based on the screen capture command, screen capture, while the second execution screen is displayed to be overlaid on the partial area of the first execution screen, by storing an image of the first execution screen in which an image of the second execution screen is not overlaid on the partial area of the first execution screen.
